# EUROPEAN PATENT APPLICATION

(11) **EP 4 789 849 A1**
(43) Date of publication of application: **12.08.2026**
(21) Application number: 26157318.2
(22) Date of filing: 09.02.2026
(51) Int. Cl.: B29C 65/36, B29L 31/08, B29L 31/30, B29L 31/00

(54) **METHOD OF ELECTROMAGNETIC WELDING OF MOLDED PARTS AND A HEAT SINK FOR USE IN SUCH METHOD**

(30) Priority: 11.02.2025 NL 2039758
(71) Applicant: Kve Composites B.V., 2497 GB Den Haag (NL)
(72) Inventor: AKAY, Erdem, c/o 2497 GB THE HAGUE (NL); WIRTZ, Thomas, c/o 2497 GB THE HAGUE (NL); RABILLÉ, Anthony, c/o 2497 GB THE HAGUE (NL)
(74) Representative: Arnold & Siedsma

(57) **Abstract**

n instrumented heat sink (7) for use in electromagnetic welding of molded parts (2, 3) comprises a material having a thermal conductivity according to ASTM C1113 at a temperature of 25 °C of greater than 25 W/m-K, and further comprises a machined cavity (70) and, accommodated therein, a sensing device (8) for measuring the temperature at a location within the cavity (70). A dimensional gap (70a) exists between the sensing device (8) and a wall (70b) of the cavity.

The instrumented heat sink (7) is advantageously used in an apparatus and method for connecting molded parts (2, 3) by electromagnetic welding. Cooling of an outer surface (21) of a molded part (2) is provided by the instrumented heat sink being in direct contact with said outer surface (21).

## Description

### TECHNICAL FIELD OF THE INVENTION

The invention relates to a heat sink for use in a method of electromagnetic welding of molded parts. The invention also relates to a method of electromagnetic welding of molded parts that uses the invented heat sink. The invention finally relates to an apparatus for electromagnetic welding of molded parts that comprises the invented heat sink.

### BACKGROUND OF THE INVENTION

Several technologies exist for joining molded parts such as fibre reinforced thermoplastic or thermosetting composite parts. Mechanical fastening and adhesive bonding are traditionally used thereto. Mechanical fastening however requires expensive hole locating, drilling, shimming, and fastener installation, and may provoke delamination of the fiber reinforced composite parts. Adhesive bonding requires complicated surface pre-treatments that may involve chemical substances.

Electromagnetic welding - also referred to as induction welding - may eliminate the use of separate fasteners and potentially offers the ability to join contact surfaces of molded composite parts at relatively high speeds and little, if any, pre-treatments. Electromagnetic welding generates an electromagnetic field in an induction-sensitive component of one or more of the molded part(s) to heat a heat meltable coupling material of the molded part(s) to above a melting temperature of the coupling material. Heating is achieved by an induction coil that induces eddy currents in an induction-sensitive component of a molded part, for instance conductive carbon fibers disposed within the molded parts. The coupling material may for instance be a thermoplastic resin of one or more of the parts to be joined or may be a separately applied thermoplastic resin. The contact surfaces of the molded parts are joined to each other by the molten coupling material. Compressing and subsequent cooling of the molded parts creates a fusion bond or weld joint.

The electromagnetic welding of the molded parts may comprise spot welding that produces a discontinuous weld at a weld point by providing a stationary inductor that, under alternating voltage, generates an electromagnetic field. The invented method and heat sink may also relate to methods of continuous welding. Such electromagnetic welding involves moving an induction coil along a weld line of the molded parts.

While electromagnetic welding is an effective method for connecting surfaces of molded parts, the inductor (or induction coil) tends to generate heat throughout the molded parts and not just at the weld interface. Controlling the temperature at which an induction weld is performed therefore remains a difficult process.

It has been proposed to perform extensive preliminary experiments and precise testing to determine the temperature at the weld. However, such procedures still do not guarantee an accurate prediction of the heating behaviour of the molded parts material in an induction welding process. It is believed that manufacturing tolerances of the molded parts to be welded, batch to batch molded part material variations and environmental factors may all affect the end quality of the weld. To overcome this challenge, a robust in-situ process controlling mechanism may be needed to achieve high quality welds during each welding run. Such a successful process control system may be able to control the weld interface temperature within a processing window. However, this seems only possible by obtaining temperature data during the induction welding process at the weld interface. In practice, such a methodology of obtaining direct temperature measurements at the weld interface may be embodied by implementing thermocouples (TCs) at the weld interface or, less accurately, at top and bottom surfaces of the molded parts to be welded. However, such a method is only useful for preliminary heat-up experiments since the method is invasive and the thermocouples become an embedded part of the welded structure.

It has been proposed in EP3772403 to locate a linear fiber optic sensor along a composite part comprising a matrix of thermoplastic reinforced by fibers and measuring temperatures through the linear fiber optic sensor. Since the linear fiber optic sensor is positioned onto the composite part, such a method cannot make use of a heat sink, since providing such a heat sink would destroy the linear fiber optic sensor. This negatively affects weld quality. EP3772403 further discloses methods wherein a heat sink is used. In such embodiments, a sensor is embedded within the heat sink, or, alternatively, may be placed at a left or right edge of the heat sink, or at the left or right edge of the weld interface, or beneath the molded parts. The sensor may comprise a thermocouple or an Electromagnetic Field (EMF) sensor, or, an infrared (IR) sensor that measures temperature. EP3772403 fails to disclose how the sensor is associated with the heat sink, but the wording 'embedded' suggests that the sensor is set firmly into a mass of the heat sink. According to the figures, the sensors seem to be glued onto the heat sink.

Although the prior art suggests using an instrumented heat sink, the known instrumented heat sink has several drawbacks. The temperature measurements may be influenced by the electromagnetic field during induction welding. Further, a defect of one of the sensors entails replacing the complete heat sink.

Thus, there is a need in the art for systems and methods of electromagnetic welding of molded parts allowing an improved control of the temperatures experienced by the weld interface between the molded parts. Another aim is to provide sensing devices such as thermocouples inside a heatsink, managing the wiring of the sensing devices to prevent interference of them with the welding process, and thereby perform stationary and reliable temperature measurements nearby the weld interface without using an invasive method.

It should be noted that US 2017/0305071 A1 discloses an electric heating device for sealing polymer films. The device incorporates a sealing portion provided with a heater and a supporting portion of aluminum for supporting the heater. The supporting portion may dissipate the heat from the heater to the outside but cannot be used as a heat sink for electromagnetic welding since aluminum strongly interferes with an electromagnetic field. The supporting body further incorporates a temperature sensor that is housed within a housing portion, placed inside the supporting portion.

### SUMMARY OF THE INVENTION

It is an object of the invention to provide an improved heat sink for use in a method for electromagnetic welding of molded parts, the heat sink overcoming at least some of the disadvantages of the known heat sink. It is another aim of the invention to provide an improved method and apparatus for connecting molded parts by electromagnetic welding.

The invention provides for this purpose a heat sink in accordance with claim 1. According to the invention, an instrumented heat sink for use in electromagnetic welding of molded parts is provided, the heat sink comprising a material having a thermal conductivity according to ASTM C1113 at a temperature of 25 °C of greater than 25 W/m-K, wherein the heat sink comprises a machined cavity and, accommodated therein, a sensing device for measuring the temperature at a location within the cavity, wherein further a dimensional gap exists between the sensing device and a wall of the cavity.

It has turned out that the dimensional gap allows a sensing device accommodated in the machined cavity to deform substantially freely. i.e. substantially independent from any deformation of the heat sink itself, such as caused by applied pressure or temperature variations.

The claimed heat sink enables obtaining a welded connection between the molded parts in a rapid and efficient manner with improved quality, without the risk of overheating. This is achieved by measuring the temperature of one or more sensors accommodated in one or more machined cavities in the heat sink and providing a dimensional gap between the sensing device and a wall of the cavity.

In another aspect of the invention, a method of connecting surfaces of a first molded part and a second molded part by electromagnetic welding is provided, the method comprising the steps of:
- providing the first and the second molded part to comprise a heat meltable coupling material and an induction-sensitive component;
- bringing together the surfaces to be connected and pressurizing the surfaces to be connected by providing a pressurizing surface of a pressurizing body against the molded parts;
- generating an electromagnetic field in at least the surfaces to be connected of the molded parts by means of an inductor that is moved in a welding direction, thereby heat melting the coupling material in a weld interface by heating the induction-sensitive component;
- cooling an outer surface of the first molded part by providing an instrumented heat sink as claimed in direct contact with an outer surface of the first molded part and optionally such that an array of sensing devices (thermocouples and/or a fiber Bragg grating sensor) extends about parallel to the welding direction;
- measuring the temperature with the sensing device and, on the basis thereof, calculating a temperature at the weld interface;
- controlling the temperature at the weld interface by controlling a welding parameter; and
- coupling the molded parts under pressure by the molten heat meltable coupling material.

Controlling a welding parameter encompasses controlling one or more welding parameters.

In yet another aspect, an apparatus for connecting surfaces of a first molded part and a second molded part along a welding direction by temperature-controlled electromagnetic welding is provided, whereby the first and the second molded part comprise a heat meltable coupling material and an induction-sensitive component, the apparatus comprising:
- an inductor provided for generating an electromagnetic field in at least the surfaces to be connected of the molded parts along the welding direction, thereby heat melting the coupling material in a weld interface by heating the induction-sensitive component;
- an instrumented heat sink as claimed with the heat sink arranged along the weld direction with its outer surface provided against one of the molded parts and such that the heat sink is arranged between the inductor and the molded parts;
- a pressurizing body provided for pressurizing the surfaces to be connected; and
- a controller adapted for measuring the temperature in the heat sink by the sensing device, and, on the basis thereof, calculating a temperature at the weld interface and controlling the welding parameter.

### DETAILED DESCRIPTION OF THE INVENTION

The invention as disclosed in summary above will now be elucidated further below.

The invention in a first aspect provides an instrumented heat sink for use in electromagnetic welding of molded parts. The heat sink comprises a material having a thermal conductivity according to ASTM C1113 at a temperature of 25 °C of greater than 25 W/m-K. Suitable heat sink materials may comprise reinforcing fibers embedded in a matrix material, wherein preferably substantially all the reinforcing fibers are oriented unidirectionally in an in-plane fiber direction. The reinforcing fibers in the heat sink may comprise carbon fibers having a thermal conductivity at room temperature ranging from 100-1000 W/m.°K and an electrical resistivity at room temperature ranging from 0.5-10 µ*Ω*.m. The reinforcing fibers in the heat sink may comprise glass fibers having a thermal conductivity at room temperature ranging from 0.1-20 W/m.°K and an electrical resistivity at room temperature ranging from 1e+10 - 1e+13 *Ω*.m. Combinations of carbon and glass fibers are also possible. Such reinforcing fibers are commercially available. In case of a composite heat sink, the matrix material of the heat sink may typically comprise a high temperature resistant material, optionally a thermosetting resin, having a glass transition temperature Tg above 350°C. Such matrix materials are also commercially available.

Other suitable heat sink materials may comprise ceramic materials, which is preferred, as will be elucidated further below.

According to the invention, the heat sink comprises at least one machined cavity and, accommodated therein, at least one sensing device for measuring the temperature at a location within the cavity. Further a dimensional gap exists between the sensing device and a wall of the cavity.

The heat sink is for use in electromagnetic welding of molded parts in that it enables removing excessive heat from an outer surface of a molded part when providing the heat sink in direct contact with said outer surface. This concentrates heating more at the surfaces to be connected (the weld interface) than in other portions of the molded parts and further prevents overheating of said other portions of the molded parts. A suitable heat sink may be planar in that it has a thickness that is smaller than its planar dimensions. The planar dimensions of the heat sink typically will be large enough to at least cover the area that needs to be welded, as defined by a weld line and a weld width. An outer surface of the heat sink is intended to contact one of the molded parts while an opposite outer surface is not intended to contact said one molded part.

According to the invention, the instrumented heat sink comprises a machined cavity and, accommodated therein, a sensing device for measuring the temperature at a location within the cavity. This is in contrast with embedding a sensing device into the heat sink, since it is not set firmly into a mass of the heat sink material. Instead, as claimed, a dimensional gap exists between the sensing device and a wall of the cavity. The dimensional gap may for instance be obtained by machining a cavity with dimensions that are slightly larger than an outer dimension of the sensing device, such as a thermocouple or a fiber optic sensor. In a circumferential direction of an elongated sensing device, the gap may be complete or partial. The latter for instance occurs when a sensing device in the form of an optical fiber, or a thermocouple wire, is inserted in a machined cavity and lowered to rest on a bottom surface of the cavity under the action of gravity. The dimensional gap then extends over a complete circumference of the sensing device, apart from its contact surface with the cavity bottom surface. It should be noted that the dimensional gap may remain unfilled, in which case the gap forms an air gap or, more generally, a gaseous gap. Such an unfilled dimensional gap is preferably used when the sensing device is a fiber optic sensor. In other embodiments, such as when using a thermocouple as sensing device, the dimensional gap may be filled at least partly with a filling material that differs from the material of the heat sink, in particular in having a lower stiffness than the heat sink material, for instance lower than 1, 5, 10, 15 to 20% thereof, such as a potting compound for instance. In embodiments wherein a fiber optic sensor is used as sensing device, the dimensional gap may also be filled at least partly with a liquid or gel-like material to substantially maintain mechanical decoupling of the fiber optic sensor and the heat sink into which it is provided. This prevents a deformation of the sensing sensor that substantially depends on the deformation of the heat sink itself. In other words, the deformations of the sensing device and of the heat sink, such as a thermal expansion, or a deformation under the applied pressure for instance, are substantially uncoupled. In this context, the wording 'substantially uncoupled' may mean that a deformation of the sensing device directly influenced by a deformation of the heat sink is less than 10% of the deformation of the sensing device caused by a temperature rise or decrease.

It should be noted that a transverse dimension of the sensing device includes any protective cover or sheath of such sensing device. In such case, the gap extends between an outer surface of such cover or sheath and the wall of the cavity.

In an embodiment of the invention, an instrumented heat sink is provided wherein the heat sink material has a thermal conductivity according to ASTM C1113 at a temperature of 25 °C from 0.1-250 W/m-K, more preferably from 25-250 W/m-K, even more preferably from 50-250 W/m-K, even more preferably still from 80-250 W/m-K.

A suitable embodiment provides an instrumented heat sink wherein the heat sink material comprises a ceramic, substantially comprising a nitride. Such materials are excellent heat sink materials in that they allow removing excessive heat from an outer surface of a molded part during induction welding.

A drawback of ceramic materials however is that they tend to be brittle, particularly those ceramics with the highest thermal conductivity. It has turned out that heat sink materials substantially comprising a composite of nitrides, more preferably substantially comprising a composite of boron nitride and aluminum nitride provide a desired combination of machinability and high thermal conductivity. These materials therefore are particularly suitable in the context of the present invention, since they allow providing the machined cavities with high precision and with a reduced risk of breakage, either instantaneously or delayed.

Ceramic materials may be oxides such as alumina, beryllia, ceria, zirconia, may be non-oxides such as carbide, boride, nitride, silicide, or may be composites herein referred to as ceramic materials that are particulate reinforced, fiber reinforced and/or combinations of oxides and non-oxides. Ceramics may be processed into a heat sink according to known processes, for instance by "forming" powders into the desired shape and then sintering to form a solid body. Forming techniques may include shaping, casting, injection molding, dry pressing, and the like. A processing method may include mixing ceramic powders and hot-pressing these powders into the shape of the heat sink. It is also possible to mix the ceramic powders in an organic matrix, such as a thermosetting resin. The weight fraction of the powders in such a composite may then be tuned to obtain the desired thermal conductivity.

In the class of preferred ceramic materials, an instrumented heat sink wherein the ceramic material has a hardness according to ISO 6508 from 15-75 HR[A], more preferably from 25-50 HR[A], ad even more preferably from 30-40 HR[A], offers a preferred embodiment.

According to the invention, the one or more cavities provided in the heat sink are machined. By this is meant that the at least one cavity is produced from a mass of heat sink material by removing some of the mass after said mass has been produced. Machining in other words refers to a subtractive manufacturing process that involves the use of tools to remove excess material from the heat sink. Machined cavities may be produced by using any appropriate tool suitable for the purpose of making a cavity. Suitable machining may use mechanical tools, such as typically used in punching, boring, drilling, turning and milling, without however being limited thereto. Machining may also involve the use of non-mechanical tools, such as typically used in chemical, electrochemical, laser beam, abrasive water jet, and ultrasonic machining, to name a few.

The cross-section of the at least one cavity may be circular or non-circular. The at least one cavity may extend along a longitudinal direction thereof over some distance, and preferably has an elongated shape in which a ratio of a longitudinal dimension to a cross-sectional dimension is larger than 1, more preferably larger than 2, 3,4, or 5. The at least one cavity may also extend from one side of the heat sink to another side thereof, in which embodiments the ratio of a longitudinal dimension to a cross-sectional dimension of the at least one cavity may be relatively large, such as up to 20, 50, 100 or even more.

An instrumented heat sink according to yet another embodiment is characterized in that the machined cavity is substantially cylindrical and has a diameter of between 0.5 and 2.5 mm, more preferably between 0.5 and 2.0 mm, even more preferably between 0.5 and 1.5 mm. A heat sink according to these embodiments has proven to be more resistant to the pressures that are typically applied in induction welding of molded parts, also after a plurality of uses, than heat sinks having larger cavities. The dimensions as claimed in these embodiments have further proven not to influence the heat removal properties of the heat sink to an appreciable extent, in particular when the gap is an air gap.

A further embodiment with improved performance relates to an instrumented heat sink wherein a cross-sectional dimension such as the diameter of the at least one cavity has a non-zero tolerance of at most 0.5 mm, more preferably at most 0.25 mm, even more preferably at most 0.2 mm. This relatively low tolerance improves the surface smoothness of a wall of the at least one cavity, which is beneficial in reducing any possible friction between an outer surface of a sensing device provided in the at least one cavity and a wall part of said cavity.

The positioning of the sensing devices accommodated in the at least one cavity may be chosen in accordance with the particular shape of the heat sink and/or the molded parts. According to an embodiment, an instrumented heat sink is provided wherein the heat sink has a thickness and a smallest distance between the machined cavity and an outer surface of the heat sink that is intended to contact one of the molded parts is at most half the thickness of the heat sink, preferably at most 1/3 of the heat sink thickness, even more preferred ¼ of the heat sink thickness. Other preferred smallest distances between the machined cavity and an outer surface of the heat sink that is intended to contact one of the molded parts are between 0.25 and 1.5 mm, more preferably between 0.25 and 1 mm, and even more preferably between 0.25 and 0.75 mm. Preferably, the cavity or cavities do not extend to the outer surface of the heat sink since such cavity or cavities could produce an imprint on the molded part contact surface, which is undesirable.

The instrumented heat sink according to the invention may accommodate any type of sensing device. A suitable embodiment relates to an instrumented heat sink wherein the sensing device comprises a thermocouple or a fiber optic sensor, preferably a fiber Bragg grating sensor, or a combination of both.

It may be sensible to select the position of the cavity or cavities in accordance with the type of sensing device chosen. In an embodiment of the invention, an instrumented heat sink is provided wherein the sensing device is a thermocouple, and wherein the machined cavity extends from an outer surface of the heat sink that is intended not to contact one of the molded parts under a nonzero angle with, and preferably substantially perpendicular to, said outer surface.

According to preferred embodiments, a distance between the machined cavity bottom and an outer surface of the heat sink that is intended to contact one of the molded parts is at most half the thickness of the heat sink, preferably at most 1/3 of the heat sink thickness, even more preferred ¼ of the heat sink thickness. Other preferred distances between the machined cavity bottom and an outer surface of the heat sink that is intended to contact one of the molded parts are between 0.25 and 1.5 mm, more preferably between 0.25 and 1 mm, and even more preferably between 0.25 and 0.75 mm. Preferably, the cavity or cavities do not extend to the outer surface of the heat sink since such cavity or cavities could produce an imprint on the molded part contact surface, which is undesirable

The heat sink according to the invention comprises one or more sensing devices that are accommodated in one or more machined cavities. Obviously, sensing devices need to be connected to auxiliary equipment such as a power supply, a computer, a measuring unit such as a voltage or current meter, and so on. In some embodiments, a sensing device may extend from one edge of the heat sink to another edge of the heat sink, and the connection between the sensing device and the auxiliary equipment may be provided at said heat sink edges or even further outside of the heat sink. In other embodiments, a sensing device may only extend within the heat sink, such as when using thermocouples as sensing device for instance. In such embodiments, appropriate wiring needs to be installed within the contour of the heat sink to connect the sensing device with the auxiliary equipment. In an embodiment therefore, the instrumented heat sink comprises machined wiring slots for accommodating said wiring. The wiring slots extend between a cavity and an edge of the heat sink to allow connecting a sensing device accommodated within the cavity to a piece of auxiliary equipment located outside the heat sink.

According to another embodiment, an instrumented heat sink is provided wherein the instrumented heat sink furthermore comprises two machined wiring slots per machined cavity, wherein the wiring slots are positioned on the outer surface of the heat sink that is intended not to contact one of the molded parts, wherein each machined wiring slot extends from the machined cavity to an edge of the instrumented heat sink, and wherein the wiring slots do not cross one another. This embodiment is preferably used in combination with a thermocouple, and turned out to significantly reduce any interference between the applied electromagnetic field during induction welding and the temperature measurement of the sensing device. An even more preferred instrumented heat sink requires the machined wiring slots to have a width between 0.5 and 2 mm, more preferably between 0.5 and 1 mm, even more preferably between 0.5 and 0.75 mm, and a depth between 0.5 and 2 mm, more preferably between 0.5 and 1 mm, even more preferably between 0.5 and 0.75 mm.

In yet another embodiment, an instrumented heat sink is proposed wherein the sensing device is a fiber Bragg grating sensor, and wherein the machined cavity extends from an edge of the heat sink substantially parallel to an outer surface of the heat sink that is intended to contact one of the molded parts towards another edge of the heat sink. The other edge may be an edge that contacts the edge from the heat sink from which the machined cavity starts or may be an edge opposite to the heat sink edge from which the machined cavity starts.

A fiber Bragg grating (FBG) sensor is known in the art per se and represents a type of distributed Bragg reflector constructed in an optical fiber that reflects particular wavelengths of light and transmits all others. This is achieved by creating a periodic variation in the refractive index of the optical fiber core, thereby creating a number of sensing elements. It has turned out that a FBG sensor may be used advantageously in induction welding. Indeed, as the induction-sensitive components in the molded parts (the carbon fibers for instance) heat up, heat dissipates to the instrumented heat sink and to a fiber Bragg grating sensor provided inside a machined cavity of the instrumented heat sink. The heating up of the optical fiber causes it to expand and also causes the refractive index of the optical fiber core to change, resulting in a shift of the Bragg wavelength. The higher the temperature, the more the optical fiber expands, the more the wavelength shifts. This increase in wavelength shift is first registered by the sensing element that is closest to the inductor, and then by another sensing element provided more downstream in the direction of welding.

The length of each sensing element within the optical fiber may be chosen according to the requirements of the case. However, an embodiment of an instrumented sink wherein the fiber optic sensor comprises a fiber Bragg grating sensor having a sensing element with a length of between 1 and 25 mm, more preferably between 1 and 15 mm, even more preferably between 1 and 5 mm, has proven to show improved performance. Smaller lengths are also possible.

The transverse dimensions of the at least one cavity and of the fiber optic sensor may be selected within a range of dimensions, depending on the dimensions of the heat sink and the molded parts for instance. The at least one cavity preferably should not be too large in order not to weaken the heat sink too much. On the other hand, the at least one cavity should be large enough to enable accommodating the sensing device in the at least one cavity, for instance by inserting it into the at least one cavity from an entrance side of the cavity and allowing the sensing device to be pushed through the cavity over some length of the cavity. The sensing device need not be inserted over the complete length of a cavity, but may be accommodated over a part of the cavity length only, such as extending to at least 50% of the cavity length, more preferably to at least 75% of its length, even more preferably to at least 90% of the cavity length.

A preferred embodiment of the instrumented heat sink provides a ratio between a transverse dimension of the fiber optic sensor and a transverse dimension of the machined cavity to be between 1 : 2 and 1 : 50, more preferably between 1 : 4 and 1 : 20, even more preferably between 1 : 5 and 1 : 10.

It turned out that, when using ceramic heat sink materials, and a Boron Nitride/Aluminum Nitride composite in particular, a surface of the molded parts that came in contact with the heat sink tended to become contaminated with an undesired residue. Thereto, an instrumented heat sink according to an embodiment is proposed wherein an outer surface of the heat sink that is intended to contact one of the molded parts is provided with a high temperature resistant polymer coating or film, preferably a polyimide film or a polysilazane coating.

The instrumented heat sink may be continuous in that it extends as one part over a substantial part of the molded part surfaces to be welded. In another embodiment, an instrumented heat sink may however be provided comprising a plurality of heat sink tiles adjacently arranged side by side against each other, preferably provided in a holder plate. The heat sink tiles are available in the form of small tiles only, for instance 50x50 mm or 25x100 mm. In such an embodiment, each heat sink tile may have a machined tile cavity, and the machined tile cavities of the adjacently arranged heat sink tiles align to form the heat sink cavity, preferably extending from one end of the heat sink to another end of the heat sink. It may however be possible that some tiles of the heat sink do not have a machined cavity. This may for instance occur at an edge of the heat sink, if desired.

A heat sink may be milled afterwards to achieve even better final tolerances.

In case a relatively long weld line needs to be made, it is customary to provide a series of tiles in a so-called heatsink holder plate. In such case however, heat transfer from tile to tile is relatively poor, which leads to steps in the temperatures along the weld line. Using the invented heatsink, heat conduction may be much more homogeneous.

The heat sink may be provided as such or may be supported in a heatsink support element, for instance a support plate. The support element preferably is also made from a high temperature resistant material, such as that used in the heat sink itself, however it may not be electrically conductive. If a reinforcing fiber is used in the support element, it preferably comprises glass fiber for being non-conductive. Another suitable material of the support element includes Micanite, a sheet or molded material made up of relatively thin mica lamellae (or layers), bonded together by a bonding agent such as Shellac, epoxy, alkyd or silicone resin. Strips of Micanite may also be used to prevent squeeze out of matrix material from the molded parts when induction heated. Such strips are typically positioned against side edges of the molded parts.

To further increase the beneficial effect of the invented heat sink, an instrumented heat sink according to an embodiment further comprises means for active cooling of the instrumented heat sink. This may allow controlling the temperature of the weld interface to an improved extent.

The invented heat sink may be used advantageously in induction welding of molded parts. According to a second aspect therefore, a method of connecting surfaces of a first molded part and a second molded part by temperature-controlled electromagnetic welding is provided, comprising the steps of:
- providing the first and the second molded part to comprise a heat meltable coupling material and an induction-sensitive component;
- bringing together the surfaces to be connected and pressurizing the surfaces to be connected by providing a pressurizing surface of a pressurizing body against the molded parts;
- generating an electromagnetic field in at least the surfaces to be connected of the molded parts by means of an inductor that is moved in a welding direction, thereby heat melting the coupling material in a weld interface by heating the induction-sensitive component;
- cooling an outer surface of the first molded part by providing an instrumented heat sink as claimed in direct contact with an outer surface of the first molded part and optionally such that an array of sensing devices (such as thermocouples and/or fiber Bragg grating sensors) extends about parallel to the welding direction;
- measuring the temperature with the sensing devices and, on the basis thereof, calculating a temperature at the weld interface;
- controlling the temperature at the weld interface by controlling a welding parameter; and
- coupling the molded parts under pressure by the molten heat meltable coupling material.

The array of sensing devices may extend along any direction. Preferably, an array of sensing devices extends along a longitudinal direction of the heat sink, which may be parallel to the weld (or welding) direction. In another preferred embodiment, an array of sensing devices extends along a transverse direction of the heat sink, which may be in a weld width direction.

In accordance with an embodiment of the invented method, a method for temperature-controlled electromagnetic welding is provided wherein the welding parameter is a field strength of the inductor, a flow of coolant, or a combination of both.

A particularly preferred embodiment according to the second aspect of the invention provides a method for temperature-controlled electromagnetic welding wherein the sensing device comprises a fiber Bragg grating sensor and measuring the temperature comprises measuring an optical wavelength shift for laser light travelling from an end of the fiber Bragg grating sensor to the sensing element, wherein the measured temperature is based on the difference between an optical wavelength shift measured during welding and a reference optical wavelength shift measured before welding.

It will be understood that the method may use any equipment instrumental in carrying out the method. For instance, a computer (or a computer readable medium) may be used that comprises programmed instructions which, when executed by a processor, are operable for performing the method as claimed in the second aspect. Such a computer may also be used to store temperature and other data, and perform calculations, such as calculating an estimated temperature of the weld line or weld area based on data generated by the sensing devices, such as the thermocouples and the optical fibers, or combinations of both.

A third aspect of the invention relates to an apparatus for connecting surfaces of a first molded part and a second molded part along a welding direction by temperature-controlled electromagnetic welding, whereby the first and the second molded part comprise a heat meltable coupling material and an induction-sensitive component, the device comprising:
- an inductor provided for generating an electromagnetic field in at least the surfaces to be connected of the molded parts along the welding direction, thereby heat melting the coupling material in a weld interface by heating the induction-sensitive component;
- an instrumented heat sink as claimed with the heat sink arranged along the weld direction with its outer surface provided against one of the molded parts and such that the heat sink is arranged between the inductor and the molded parts;
- a pressurizing body provided for pressurizing the surfaces to be connected; and
- a controller adapted for measuring the temperature in the heat sink by at least one sensing device, and, on the basis thereof, calculating a temperature at the weld interface and controlling a welding parameter.

The first and/or second molded part may conveniently be made by fiber-reinforced composite materials, comprising reinforcing fibers such as carbon, graphite, and/or glass fibers, and a matrix material in which the reinforcing fibers are embedded. The matrix material preferably comprises a thermoplastic polymer. Examples of suitable matrix materials for the reinforcing fibers include but are not limited to thermoplastic polymers such as polyamides, polyimides, polyethersulphones, polyaryletherketones (PAEK) (e.g., low-melt polyaryletherketone (LM PAEK), polyetheretherketone (PEEK), and polyetherketoneketone (PEKK)), polyurethanes, polyphenylene sulphides (PPS), polyamide-imides, polycarbonate, polyphenylene oxide blend (PPO), as well as mixtures and copolymers of one or more of the above polymers. The fibrous composites typically comprise from 25% to 60% by volume of fibers.

The first and/or second molded part may comprise fiber-reinforced composite layers in the form of a woven fabric for instance. The layers preferably comprise substantially continuous fibers that mainly extend in one direction (so called UD material), like under angles of 0°, 90° and/or 45° with respect to a reference direction. The layers are preferably provided symmetrically with respect to a mid-plane of the laminate. It is advantageous to use the fiber-reinforced composite layer in the form of a preimpregnated semi-finished product. Such a "prepreg" shows generally good mechanical properties, among other reasons because the fibers have already been wetted in advance by the matrix polymer. Laminates of UD reinforced fibers with a PPS and/or a PAEK polymer matrix are particularly preferred. A very suitable PAEK polymer matrix comprises Toray TC1225.

The heat sink may be provided between the inductor and the pressurizing surface and preferably in direct contact with both. The material of the heat sink is configured for extracting heat from the surroundings. The heat sink acts as a passive heat exchanger that transfers the heat generated in a top part of the molded parts to the surrounding air, or to cooling means provided on or in the inductor. It is also possible to provide the heat sink (a second one) in contact with a surface of the molded parts that is opposite to the pressurizing surface facing the inductor. The heat sink is than provided between the opposite surface and a counter-pressure system, for instance embodied by a rubber element that may be inflated. This configuration is particularly advantageous when the molded part facing away from the inductor is relatively thin. Such a thin molded part may melt easily.

The geometry of the inductor, such as its cross-sectional shape, may in principle be chosen according to the needs. The cross-section may for instance be triangular, or circular. A useful embodiment relates to a device wherein the inductor has a quadrilateral cross-section.

The 3D shape of the inductor may also be chosen according to the needs. This may be relevant since, in some embodiments disclosed further below, the inductor not only needs to heat the molded parts at the position of welding but may also need to heat other parts of the device. The electromagnetic field in some embodiments therefore needs to be extended.

The apparatus according to the invention applies pressure onto the molded parts to be welded by means of the pressurizing body. Another embodiment of the device comprises counter-pressure means at a side of the joined molded parts opposite to the pressurizing surface, either passive or active.

The apparatus as claimed in a practical embodiment is provided at an end of a robotic arm or other tool as end-effector. This allows positioning the inductor accurately on the joined molded parts in order to define and effectuate a welding path.

Depending on the materials used, in particular the induction-sensitive component and the distance of the inductor from this component, a suitable power and frequency can be determined. The frequency determines inter alia the penetrative power of the electromagnetic field; the electric power of the inductor determines the strength of the fluctuating electromagnetic field and thereby the degree of heat generated in the induction-sensitive component.

The Foucault currents or eddy currents induced in the surfaces to be connected are bounded by the geometry of the molded parts. Edges, corners and holes in the molded parts may influence the distribution of Foucault currents and therefore also influence the heat developed. Such disruptions of the field may result in heating of components which do not have to be heated for the welding process. Conversely, it is also possible that some parts are difficult to heat. These problems can be solved by repositioning the boundaries of the area where Foucault currents may begin to occur at determined locations of the thermoplastic molded parts. With this preferred embodiment, parts that were formerly difficult to heat can nevertheless be heated and high temperatures at undesired locations can be prevented.

For application in the method as claimed in the invention, the inductor is connected to an alternating current generator, wherein the alternating current generator is electrically connected to the electrical connecting means of the inductor. Usable frequencies lie generally between 0.1-10 MHz. A frequency between 0.1 and 0.5 MHz is preferably used, and more preferably a frequency between 0.15 and 0.4 MHz. At such a preferred frequency an optimal balance is achieved between penetrative power of the electromagnetic field and rate of heating.

The method according to the invention using the claimed heat sink may connect first and second molded parts of any shape. For instance, the first molded part may comprise a skin panel of an aircraft, and the second molded part may comprise a stiffener for supporting the skin panel. Other examples include window frames for aircraft, covers for fuel tanks, wind turbine components, and the like.

### BRIEF DESCRIPTION OF THE FIGURES

Examples of the invention will now be elucidated with reference to the following figures, without however being limited thereto. In the figures:
Figure 1 schematically shows a welding system in perspective view that may be used in a method in accordance with an embodiment of the invention;
Figure 2 schematically shows a cross-sectional view of a step of an induction welding method in accordance with an embodiment of the invention;
Figure 3A schematically shows a top view in perspective of a heat sink tile in accordance with an embodiment of the invention;
Figure 3B schematically shows a top view in perspective of a heat sink tile in accordance with another embodiment of the invention;
Figure 3C schematically shows a cross-sectional view of the heat sink tile of figure 3A and a step of the induction welding method in accordance with an embodiment of the invention;
Figure 3D schematically shows a detailed cross-sectional view of the cavity of the heat sink tile of figure 3C;
Figure 4 schematically shows a top view of a heat sink comprising a plurality of heat sink tiles, adjacently arranged in a holder plate in accordance with another embodiment of the invention;
Figure 5 shows a chart of the temperatures detected with thermocouples during induction welding in accordance with an embodiment of the invention;
Figure 6A schematically shows a top view in perspective of a heat sink tile in accordance with an embodiment of the invention;
Figure 6B schematically shows a top view in perspective of the heat sink tile of figure 6A cut open along a plane extending in a weld direction to expose a cavity and an optical fiber accommodated therein;
Figure 6C schematically shows a cross-sectional view of the heat sink tile of figure 6A and a step of the induction welding method in accordance with an embodiment of the invention;
Figure 7 schematically shows a top view of a heat sink comprising a plurality of heat sink tiles according to figure 6A, adjacently arranged in a holder plate in accordance with another embodiment of the invention and cut open along a plane extending in a weld direction to expose a cavity and an optical fiber accommodated therein;
Figure 8 schematically shows a top view in perspective of a heat sink tile in accordance with yet another embodiment of the invention;
Figure 9 shows a device for holding a heat sink or heat sink tile during machining of cavities in accordance with an embodiment of the invention;
Figure 10 shows an instrumented set-up of molded parts in accordance with an embodiment of the invention;
Figure 11 shows a chart of the temperatures detected with thermocouples and fiber Bragg grating sensors during induction welding in accordance with an embodiment of the invention;
Figure 12 shows a flow chart of an induction welding in accordance with an embodiment of the invention; and finally
Figures 13 - 16 schematically show several assemblies of a heat sink tile and a holder plate according to embodiments of the invention.

### DESCRIPTION OF EXEMPLARY EMBODIMENTS

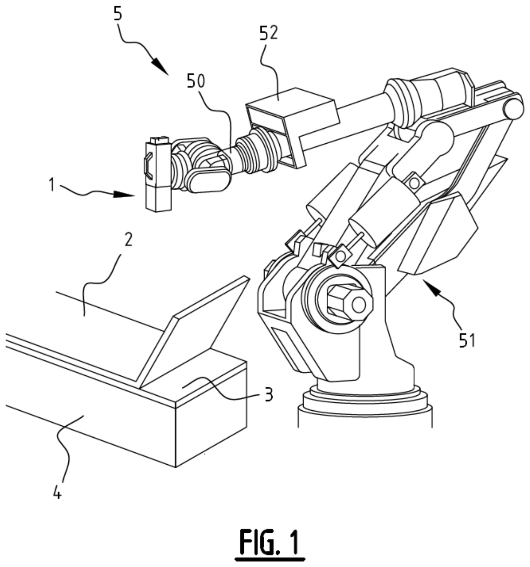

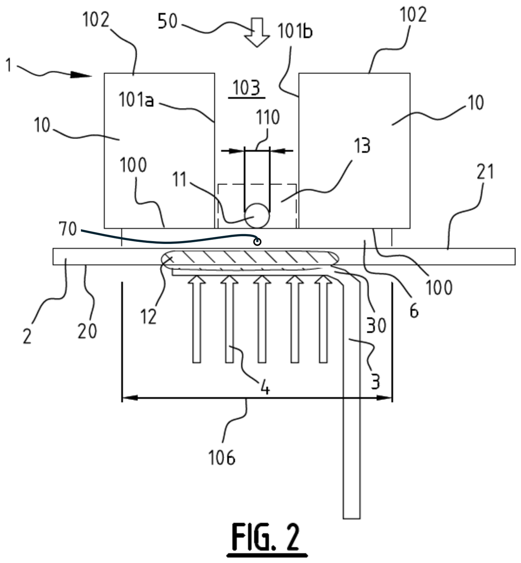

Figure 1 shows a welding system 5 provided with a device 1 that may be used in the method in accordance with an embodiment of the invention. The device 1 acts as an end-effector of a robotic arm 50 that is part of an industrial six-axis robot 51. It should be noted that the robotic arm 50 is not essential to the invention and that other displacing means for the device 1 may be envisaged, such as a static actuator. The robot 51 is programmed to move the robotic arm 50 and the end-effector device 1 towards an assembly of molded parts (2, 3) to be welded along a path, or to be welded in positions where a spot weld has to be made. An inductor 11 that is incorporated in the device 1 (visible in figure 2) is in operation connected to an alternating current generator 52 arranged on the robot 51 for the purpose of generating an electromagnetic field. The alternating current generator 52 may however be positioned elsewhere. In the embodiment shown, counter-pressure means 4 are provided at a side of the joined molded parts (2, 3) opposite to the side where the robotic arm 50 is approaching the assembly (2, 3). The counter-pressure means 4 may be embodied as a solid body or may be active in the sense that it can press against said side of the joined molded parts (2, 3), for instance when embodied as an inflatable bellow.

As shown in more detail in figure 2, a suitable system for connecting surfaces of the molded parts (2, 3) by electromagnetic welding comprises a pressurizing body 10 that may be a solid block of high-temperature non-metallic material or may be embodied otherwise, as long as it may exert pressure on a substrate. The pressurizing body 10 of figure 2 has two side surfaces (101a, 101b) in addition to the pressurizing surface 100, and a top surface 102 opposite the pressurizing surface 100. As shown, the pressurizing body 10 further has a central pocket 103 through which the inductor 11 can be moved along a welding path. The pressurizing body 10 cooperates with the counter-pressure means 4 to bring as assembly of molded parts (2,3) under pressure during induction welding.

According to figure 2, the inductor 11 is provided within the central pocket 103 of the pressurizing body 10 to be able to bring it as close as possible to an outer surface 21 of molded part 2. The inductor 11 is moved by the robotic arm 50 at a small distance of said surface 21 and during movement generates an electromagnetic field 12 in at least the contact surfaces (20, 30) of the molded parts (2, 3) to be welded together. In the embodiment shown, the inductor 11 has a cylindrical cross-section, and further is provided with a linear segment such that the inductor is configured to generate a substantially cylindrical electromagnetic field in at least the contact surfaces (20, 30) to be connected of the molded parts (2, 3). In this way, the electromagnetic field may be concentrated to not extend much further than the position to be welded. The linear segment(s) in figure 2 extend substantially parallel to the pressurizing surface 100 of the pressurizing body 10. More than one inductor may be used.

A shielding 13 may be provided around at least a part of the inductor 11. The shielding is configured to protect against overheating and/or to concentrate the electromagnetic field for providing deeper penetration. It is thereto made from a suitable heat isolating material, such as Fluxtrol^{®}.

The invented device 10 further comprises a heat sink 6 that is provided in between the inductor 11 and the outer surface 21 of the first molded part 2, and also between the pressurizing surface 100 and the outer surface 21 of the first molded part 2. The heat sink 6 typically is a separate body, positioned such that it is in direct contact with the pressurizing surface 100 and the outer surface 21. The heat sink 6 may be embodied as a platelike structure that extends along the weld line over a length that covers at least the weld length and over a width 106 that covers at least the weld (or welding) width. As schematically shown in figure 2, the heat sink 6 is provided with at least one cavity 70 into which a sensing device such as a thermocouple or optical fiber may be accommodated, as will be disclosed in more detail further below.

The heat sink 6 is made from a material with a thermal conductivity as claimed. Its stiffness and/or hardness may be chosen such that one or more cavities do not substantially deform when the heat sink 6 is subjected to pressures of say 7 to 8 bar repeatedly under high temperatures of 500°C and even more, which are typical pressures and temperatures used in induction welding. A very suitable material may be a Boron Nitride/AluminumNitride (BN/AlN) composite material, such as Aremcolox 502-1820 obtainable from Aremco. This material has a thermal conductivity of about 85 W/m-K.

In an initial step (figure 2), a device 1 is provided in proximity to a first molded part 2 and a second molded part 3 that need to be connected through electromagnetic welding. The molded parts (2, 3) have been assembled and provided between the pressurizing body 10 and the counter-pressure means 4. A heat sink 6 is applied on top of the assembly of molded parts (2, 3), as shown. The molded parts (2, 3) comprise a heat meltable coupling material and an induction-sensitive component to heat them up under the influence of an electromagnetic field, produced by the inductor 11. Thereto, the molded parts (2, 3) may be manufactured from a thermoplastic polymer reinforced with carbon fibres, wherein the carbon fibres may serve as induction-sensitive component, and the thermoplastic polymer may serve as heat meltable coupling material. The first molded part 2 may represent the skin of an aircraft, while the second molded part 3 may have a folded edge and may for instance represent a stiffener. Obviously, both molded parts (2, 3) may have any other shape, such as being curved.

A further step comprises generating an electromagnetic field in at least the contact surfaces (20, 30) to be connected of the molded parts (2, 3) with the inductor 11, while moving said inductor 11 along a welding path. This heats and possibly melts the thermoplastic polymer in a volume 12 that covers part of the contact surfaces (20, 30) of both molded parts (2, 3) by heating the carbon fibers in the molded parts (2, 3). The temperature in the volume 12 may not be uniform throughout, and a central part of the volume only may have a temperature that exceeds the melting temperature of the thermoplastic polymer. Obviously, the temperature of the volume 12 will be highest when the inductor 11 is right above it. In a more downstream position of the inductor 11 along the welding path, the temperature in a volume 12 located more upstream with respect to said inductor location will be decreased, which solidifies the thermoplastic polymer. The heat sink 13 provided against one (20) of the two molded parts (20, 30) is instrumental in focussing the heat in the volume where it is needed (around the welding path) and take away heat from parts where it is not needed. Also, a cylindrical electromagnetic field is preferred for this reason. The heating of the molded parts (2, 3) in the assembled configuration to a temperature which is high enough to heat melt the thermoplastic polymer fuses the two molded parts (2, 3) together at least in a volume along a welding path. During the heating and/or optionally a short time thereafter, the contact surfaces (20, 30) are preferably pressed together by the pressurizing body 10 and counter-pressure means 4, so as to bring about a connection between the molded parts (2, 3). The connected assembly (2, 3) may then be removed from the welding system.

In an embodiment used for spot-welding, the pressurizing body 10 may be incorporated in the device 1, and possible also a heat sink 6 may be associated with device 1.

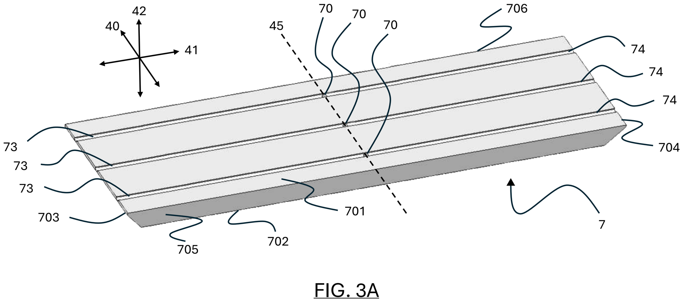

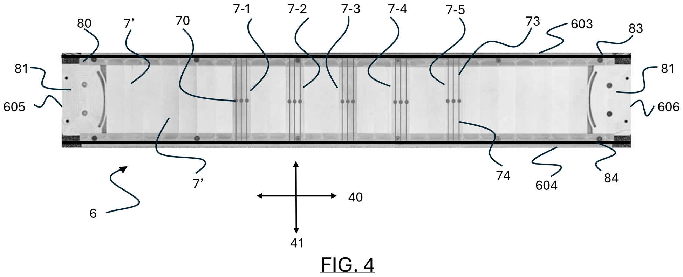

In figure 3A, an instrumented heat sink tile 7 in accordance with an embodiment of the invention is shown. As will be elucidated further in the context of figure 4, several of such instrumented heat sink tiles 7 may be positioned side by side in a holder to form a heat sink 6. The heat sink 6 is used in a method for connecting two molded parts (2, 3) by electromagnetic welding, as disclosed hereinabove. Each instrumented heat sink tile 7 is bounded by a surface 701 that is intended to be in contact with the pressurizing body 10 (see figure 2) and a surface 702 opposite of surface 701 that is to be in contact with the upper surface 21 of molded part 2 (see figure 2). Surface 702 may comprise a high temperature polymer coating or film to protect the molded parts from staining and/or to extend the service life of the instrumented heat sink tile. The polymer coating or film is preferably a polyamide film or polysilazane coating. The instrumented heat sink tile 7 furthermore has two side edges (703, 704) extending about parallel to a weld direction 40, and two edges (705, 706) extending about parallel to weld width direction 41 that is perpendicular to the weld direction 40. To form a heat sink 6, several instrumented heat sink tiles 7 are provided against each other along the edges (705, 706). In this way, an elongated instrumented heat sink 6 is formed that extends along a welding path in the welding direction 40.

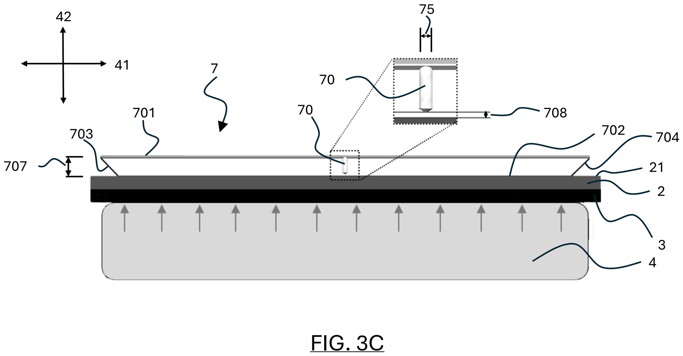

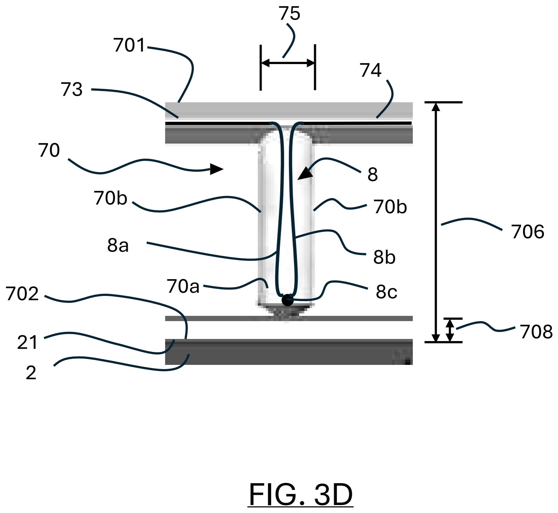

In one embodiment of the invention shown in figure 3A and 3C, the instrumented heat sink tile 7 comprises one or more machined cavities 70 extending from the surface 701 and about perpendicular to said surface 701, as is apparent from figure 3C. The machined cavities 70 are provided to accommodate sensing devices for measuring the temperature at a location within the cavities 70, typically thermocouples 8, as is apparent from figure 3D.

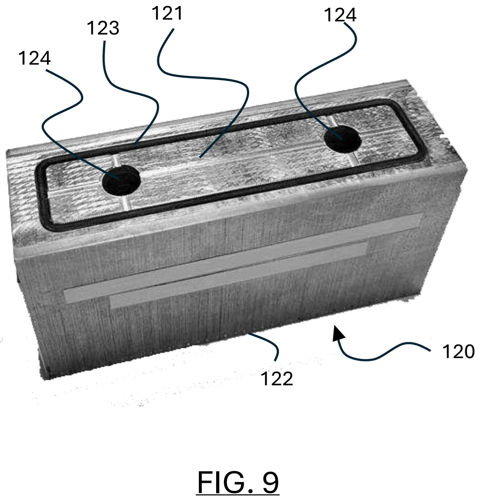

Each machined cavity 70 is preferably substantially cylindrical and may have a diameter 75 in the range of 0.5 to 2.5 mm, preferably between 0.5 and 2.0 mm, more preferably between 0.5 and 1.5 mm. The diameter should be sufficient to accommodate a sensing device, while ideally being as small as possible to maximize the amount of heat sink material that can absorb heat during welding. Preferably, the diameter 75 (or another transverse dimension) of each machined cavity 70 has a non-zero tolerance of at most 0.5 mm, more preferably at most 0.25 mm, even more preferably at most 0.2 mm. Such tight tolerances reduce the risk of malfunction of the heat sink 6. A manner to achieve the desired tight tolerances may be achieved by a method disclosed further below with reference to figure 9.

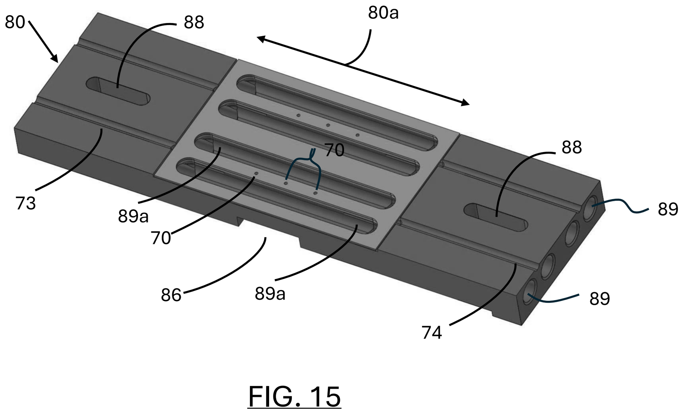

In the embodiment shown in figures 3A and 3C, the machined cavities 70 are arranged along an imaginary line 45 extending substantially parallel to the weld direction 40. This configuration allows measuring the temperature along the weld path in the weld direction 40 at three different locations per heat sink tile 7. Each instrumented heat sink tile 7 furthermore comprises two machined wiring slots (73, 74) provided within the surface 701 for each machined cavity 70. The machined wiring slots 73 extend from each machined cavity 70 to the edge 703 of the instrumented heat sink, whereas machined wiring slots 74 extend from each machined cavity 70 to the edge 704 of instrumented heat sink tile 7. The path that the wiring slots (73, 74) follows from the machined cavities 70 to the edge 703 or edge 704 may have any shape, as long as it does not cross itself or any other wiring slot (73, 74). Each path is preferably a shortest distance between the machined cavities 70 and the edge 703 or edge 704. The machined wiring slots may have a width between 0.5 and 2 mm for instance, such as between 0.5 and 0.75 mm. The machined wiring slots may furthermore have a depth between 0.5 and 2 mm for instance, such as between 0.5 and 0.75 mm. The dimensions of the wiring slot are selected such that the wiring of the sensing device can be embedded within the wiring slot and such that substantially all of the wiring is located below surface 701. This prevents compression of the wiring by pressurizing body 10 and prevents contact between the wiring and the device 1 during electromagnetic welding, thereby contributing to an extended service life of the sensing device and/or the instrumented heat sink. In other embodiments (see for instance figure 15), the wiring slots may alternatively be comprised within a holder plate.

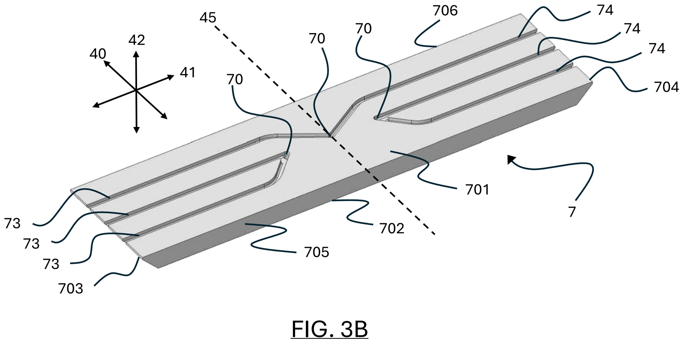

In figure 3B, an instrumented heat sink 7 according to another embodiment of the invention is shown. The embodiment comprises multiple machined cavities 70 that are arranged in a line which is substantially parallel to weld width direction 41 and substantially perpendicular to the weld direction 40. The instrumented heat sink 7 furthermore comprises two machined wiring slots (73, 74) on surface 701 for the machined cavity 70 which is positioned substantially equidistant from side surfaces 703 and 704, wherein one machined wiring slots 73 extends from said machined cavity 70 to edge 703 and one machined wiring slots 74 extends from said machined cavity 70 to edge 704. For the machined cavities 70 which are located closest to edge 703, two wiring slots 73 preferably extend from this machined cavity 70 to edge 703, whereas for the machined cavities 70 which are located closest to edge 704, two wiring slots 74 preferably extend from this machined cavity 70 to edge 704. In other embodiments not shown, wiring slots for machined cavities 70 located closer to either edge 703 or edge 704 may also be arranged such that one wiring slot 73 extends from machined cavities 70 to edge 703 and one wiring slot 74 extends from machined cavities 70 to edge 704. The path that the wiring slots (73, 74) follow from the machined cavities 70 to an edge 703 or 704 can have any shape, as long as it does not cross itself or any other wiring slot (73, 74). The path is preferably a shortest distance between the machined cavities 70 and the edge 703 or 704.

In figure 3C, a cross-sectional view of a step of the welding method in accordance with another embodiment of the invention is shown. The instrumented heat sink comprises a heat sink tile 7 which may be held in a heat sink holder plate (not shown). The heat sink tile 7 has a thickness 707. A machined cavity 70 inside instrumented heat sink tile 7 extends substantially perpendicular from surface 701 that is to be in contact with the pressurizing body 10 (not shown). A smallest distance 708 between the machined cavity 70 and the surface 702 that is to be in contact with surface 21 of molded part 2 is at most half the thickness 707 of heat sink tile 7. Preferably, the smallest distance 708 is between 0.25 and 1.5 mm, more preferably between 0.25 and 1 mm, even more preferably between 0.25 and 0.75 mm. The machined cavities 70 can accommodate sensing devices (not shown) for measuring the temperature at a location within the cavities, typically a thermocouple. Please note that figure 3C represents a cross-sectional view though a vertical mid-plane of the instrumented heat sink 6. Although the machined cavity 70 may appear open at a front side, it will in embodiments be enclosed in the instrumented heat sink tile 7 material, such as in a central cylindrical cavity provided in a solid block for instance.

In figure 3D, a portion of the cross-sectional view of figure 3C is reproduced, wherein the positioning of the sensing device inside the machined cavity 70 is shown in detail. Thermocouple 8 is provided inside machined cavity 70 such that a dimensional gap 70a exists between the thermocouple 8 and a wall 70b of the cavity 70. The dimensional gap 70a may be an air gap, i.e. may be filled with (ambient) air. In other embodiments, the dimensional gap 70a may also be filled with a material other that the material of the heat sink tile 7, such as a potting compound for instance. Each thermocouple 8 comprises dissimilar conductors (8a, 8b) that contact at a measuring junction 8c, as is known in the art. Each thermocouple 8 is connected to an electrical wiring system and a voltage meter (not shown), as is known in the art. An insulating element such as a polyimide film (not shown) can be positioned in between the conductors (8a, 8b) within machined cavity 70 to eliminate the risk of short circuiting of the wires.

Figure 4 schematically shows an instrumented heat sink 6 comprising a number of heat sink tiles adjacently arranged side by side against each other in a holder plate 80 in accordance with an embodiment of the invention. The instrumented heat sink 6 comprises heat sink tiles with instrumentation (7-1 to 7-5) and heat sink tiles without instrumentation (7'). In other embodiments, the instrumented heat sink may also comprise only heat sink tiles with instrumentation. The holder plate 80 comprises holder plate end brackets 81 that keep the heat sink tiles inside the holder plate 80. The holder plate 80 furthermore comprises a groove (not shown) along its centerline. The groove aligns with central pocket 103 to receive device 1 during electromagnetic welding, such that the pressurizing surface 100 of device 1 is in direct contact with a surface of the heat sink tiles (7-1 to 7-5, 7').

The instrumented heat sink 6 shown in figure 4 comprises five instrumented heat sink tiles (7-1 to 7-5) and twenty-two heat sink tiles without instrumentation 7'. Each instrumented heat sink tile (7-1 to 7-5) has a layout comparable to heat sink 7 in figure 3a and comprises a set of three thermocouples inside three machined cavities 70. Each machined cavity 70 in instrumented heat sink tiles 7-1 to 7-5 can accommodate a thermocouple for measuring the temperature at a location within the cavity. The machined cavities 70 in each instrumented heat sink tile are positioned such that an array of heat sink tiles positioned side by side, said array comprising multiple instrumented heat sink tiles, forms at least one array of machined cavities 70 that are arranged in a line which is substantially parallel to weld direction 40. Instrumented heat sink 6 in figure 4 comprises fifteen machined cavities 70 that are arranged along the centerline of the heatsink 6 in a line parallel to weld direction 40.

In other embodiments not shown, the instrumented heat sink tiles might have a layout as presented in figure 3b, or any other layouts that meet the claimed requirements. In embodiments where the instrumented heat sink 6 would comprise heat sink tiles with a layout comparable to heat sink tile 7 in figure 3b, the machined cavities 70 would be arranged in three lines parallel to weld direction 40, with one such line positioned at the center line of heat sink 6 along weld direction 40 and the other two lines positioned equidistant at opposite sides of the centerline.

The instrumented heat sink tiles (7-1 to 7-5) comprise two machined wiring slots 73 and 74 for each machined cavity 70, wherein machined wiring slots 73 extend from the machined cavity 70 to edge 603 of the instrumented heat sink 6 and machined wiring slots 74 extend from the machined cavity 70 to edge 604 of the instrumented heat sink 6. The holder plate 80 comprises at least one wiring slot 83 on side 603 and at least one wiring slot 84 on side 604 of heat sink 6, wherein the wiring slots (83, 84) extend from edge 605 and terminate at edge 606 of instrumented heat sink 6. Each machined wiring slot 73 in the instrumented heat sink tiles (7-1 to 7-5) terminates at a wiring slot 83 in the heat sink holder plate and each machined wiring slot 74 in the instrumented heat sink tiles (7-1 to 7-5) terminates at a wiring slot 84 in the heat sink holder plate. Holder plate wiring slots (83, 84) can encompass wires extending from multiple instrumented heat sink tiles (7-1 to 7-5). The machined wiring slots (73, 74) in the instrumented heat sink tiles (7-1 to 7-5) may alternatively be comprised within holder plate 80.

Please note that figure 4 represents a schematic view of instrumented heat sink 6 as viewed from the surface that is to be contacted with surface 21 of molded part 2 (not shown). Although the machined cavities 70 and machined wiring slots 73 and 74 are schematically shown, they will in embodiments be enclosed in the instrumented heat sink tiles (7-1 to 7-5). Likewise, although wiring slots 83 and 84 are schematically shown, they will in embodiments be enclosed in the holder plate 80 material.

The instrumented heat sink 6 of figure 4 was used in an electromagnetic welding experiment. Thermocouples were placed in each machined cavity 70 and additional thermocouples were positioned on and between the molded parts (20, 30). Specifically, five thermocouples were placed between the contact surfaces (20, 30) of the molded parts (2, 3) and such that one thermocouple was positioned underneath each of instrumented heat sink tiles 7-1 to 7-5 along a line that is substantially perpendicular to weld direction 40 and weld width direction 41. Furthermore, four thermocouples were placed between the contact surface 21 of molded part 2 and instrumented heat sink 6, and such that one thermocouple was positioned underneath each of instrumented heat sink tiles 7-2 to 7-5 along a line that is substantially perpendicular to weld direction 40 and weld width direction 41. Note that in this particular embodiment, no thermocouple was present between the contact surface 21 of molded part 2 and instrumented heat sink 6 at the position underneath instrumented heat sink tiles 7-1 due to limitations in the experimental setup.

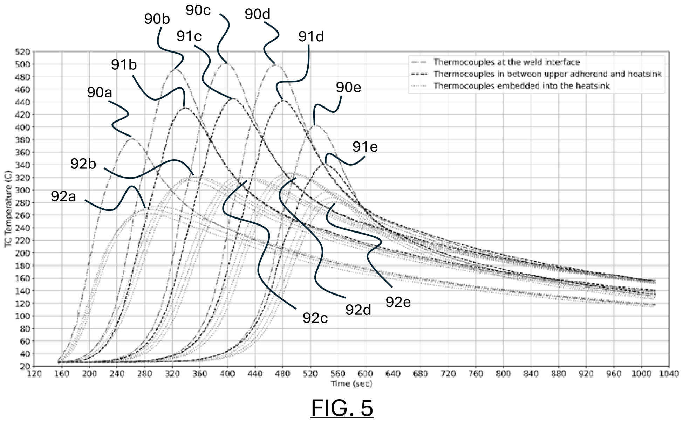

Figure 5 is a chart illustrating the temperature measured with the thermocouples during the electromagnetic welding experiment. The x-axis represents the duration of the experiment in seconds and the y-axis represents the measured temperature in °C. The temperature can be measured with any type-E thermocouple as long as a dimensional gap 70a can exist between the thermocouple 8 and a wall 70b of the cavity 70 and as long as the wires are embedded within the machined wiring slots 73 and 74 such that substantially all of the wiring is located below surface 701. For the experiment in this embodiment, Omega TT-E-40 thermocouple wires were used, which were spot welded for this experiment.

The temperature profiles measured by the set of three thermocouples contained inside the machined cavities of the instrumented heat sink tiles (7-1 to 7-5) are displayed as groups of three dotted lines (92a-92e). From left to right, the first set of three dotted lines 92a corresponds with temperatures measured by the three thermocouples inside instrumented heat sink tiles 7-1, the second set of three dotted lines 92b corresponds with temperatures measured by the three thermocouples inside instrumented heat sink tiles 7-2, and so forth.

The dashed lines (91b-91e) represent temperature profiles measured with thermocouples positioned between the contact surface 21 of molded part 2 and instrumented heat sink 6. From left to right, the first dashed line 91b corresponds with temperatures measured by the thermocouple that is aligned under instrumented heat sink tiles 7-2, the second dashed line 91c corresponds with temperatures measured by the thermocouple that is aligned under instrumented heat sink tiles 7-3, and so forth.

The dots-and-dashes lines (90a-90e) represent temperature profiles measured with thermocouples positioned between the contact surfaces (20, 30) of the molded parts (2, 3). From left to right, the first dots-and-dashes line 90a corresponds with temperatures measured by the thermocouple that is aligned under instrumented heat sink tiles 7-1, the second dots-and-dashes line 90b corresponds with temperatures measured by the thermocouple that is aligned under instrumented heat sink tiles 7-2, and so forth. During the experiment, device 1 is moved from left to right in figure 4 along a weld line, which in figure 4 is substantially parallel to weld direction 40 along the centerline of instrumented heat sink 6, thus substantially passing directly over each thermocouple. As the inductor 11 in device 1 moves along the weld line, an electromagnetic field generated by the inductor 11 heats up the induction-sensitive components in the molded parts (2, 3). As the inductor approaches the position of instrumented heat sink tile 7-1, an increase in temperature is measured by the thermocouples as a result of the induction-sensitive components heating up in the vicinity of the thermocouple. This increase in temperature is first registered by the thermocouples positioned in or under instrumented heat sink tiles 7-1, then by the thermocouples positioned in or under instrumented heat sink tiles 7-2, and so on. A slight time shift is observed between peaks 90a to 90e, peaks 91b to 91e, and peaks 92a to 92e due to the time it takes for heat to dissipate from the weld interface to the location of each respective sensing device. Once the inductor has passed the position of a thermocouple and continues its path along the weld line, the thermocouple will measure a decrease in temperature as the magnetic field strength subsides and the heat in the induction-sensitive components slowly dissipates until it reaches equilibrium with the surrounding temperature.

As can be observed in figure 5, of the three positions where temperatures are measured, the highest temperatures (90a-90e) are measured by the thermocouples positioned between the contact surfaces of the molded parts (20, 30), the second highest temperatures (91b-91e) are measured by the thermocouples positioned between the contact surface 21 of molded part 2 and instrumented heat sink 6, and the lowest temperatures (92a-92e) are measured by the sets of three thermocouples contained inside each instrumented heat sink tiles (7-1 to 7-5).

The thermocouples positioned in or under instrumented heat sink tiles 7-1 and 7-5 are positioned at or near the edge of the molded parts (20,30) and therefore experience an edge effect where the magnetic field becomes inhomogeneous. This results in less heat being induced in the induction-sensitive components and thus in lower measured temperatures when compared to the temperatures measured by the thermocouples in or under instrumented heat sink tiles 7-2, 7-3, and 7-4 that do not experience these edge effects.

A first correlation exists between the temperature measured by a thermocouple positioned inside a machined cavity in the heat sink and the temperature at the weld interface, and a second correlation exists between the electromagnetic field strength of the inductor 11 and the temperature at the weld interface. During electromagnetic welding, the temperature is measured by a thermocouple 8 positioned inside a machined cavity 70 in the heat sink 6 and the first correlation is used to calculate the temperature at the weld interface. The second correlation is used to control said calculated temperature at the weld interface by adjusting the electromagnetic field strength of the inductor 11.

The first statistical correlation in between interface temperature and heatsink temperature was performed by a Pearson's correlation to the data using a "scipy.stats.pearsonr" module in Python, as further explained in https://docs.scipy.org/doc/scipy/reference/generated/scipy.stats.pearsonr.html, incorporated herein by reference in its entirety. The Pearson correlation coefficient measures a linear relationship between two datasets. Like other correlation coefficients, this one varies between -1 and +1 with 0 implying no correlation. Correlations of -1 or +1 imply an exact linear relationship. Positive correlations imply and increase in both variables x and y, while negative correlations imply that as x increases, y decreases.

As an example, the temperature readings of the center TC at each tile in the instrumented heatsink (curves 92a, 92b, 92c, 92d and 92e) were correlated with the temperature readings of the weld interface TCs (curves 90a, 90b, 90c, 90d and 90e). The correlation was performed between temperature readings of TC positioned at a same location along the weld direction (data 92a with 90a, 92b with 90b, etc.). The correlation matrix obtained is shown in Table 1:

**Table 1: correlation between temperature readings**

| curves | 90a | 90b | 90c | 90d | 90d |
|---|---|---|---|---|---|
| 92a | 0.921156 | | | | |
| 92b | | 0.916208 | | | |
| 92c | | | 0.900802 | | |
| 92d | | | | 0.928165 | |
| 92e | | | | | 0.953149 |

These correlation coefficients show an excellent linear relation between the temperature readings of the center TC at each tile in the instrumented heatsink (curves 92a, 92b, 92c, 92d and 92e) and the actual temperature readings of the weld interface TCs (curves 90a, 90b, 90c, 90d and 90e).

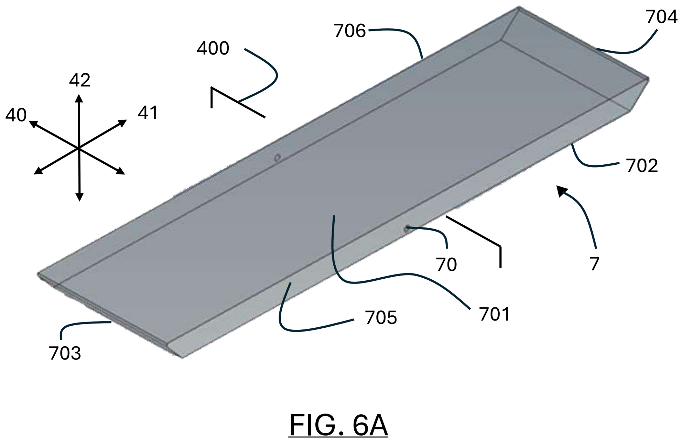

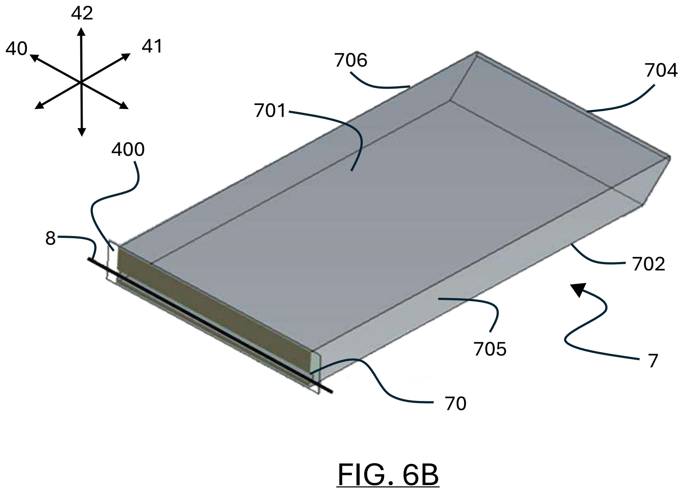

With reference to figure 6A, an instrumented heat sink tile 7 according to another embodiment of the invention is shown. The instrumented heat sink tile 7 is used to connect two molded parts (not shown). The instrumented heat sink tile 7 has a surface 701 that is to be in contact with the pressurizing body 10 (see figure 2) and a surface 702 opposite of surface 701 that is to be in contact with surface 21 of molded part 2 (not shown). The instrumented heat sink tile 7 furthermore has two side edges (703, 704) extending about parallel to the weld direction 40, and two side edges (705, 706) extending about parallel to weld width direction 41 that is perpendicular to weld direction 40. To form a heat sink 6, several instrumented heat sink tiles 7 are provided against each other along the edges (705, 706). In this way, an elongated instrumented heat sink 6 is formed that extends along a welding path in the welding direction 40. The instrumented heat sink tile 7 comprises a machined cavity 70 that extends from edge 705 of heat sink tile 7 substantially parallel to surface 702 and towards opposite edge 706 of the heat sink tile 7. A midplane 400 that is parallel to directions 40 and 42 cuts through the instrumented heat sink tile 7 and the machined cavity 70 comprised in said instrumented heat sink tile 7. Figure 6B displays a cross sectional view of said midplane 400 cutting through the instrumented heat sink tile 7 from figure 6A. The machined cavities 70 can accommodate a sensing device for measuring the temperature at a location within the machined cavity 70, preferably a fiber optic sensor 8 as shown in figure 6B. The fiber optic sensor is preferably a fiber Bragg grating sensor.

Note that in figure 6A and 6B, the machined cavity 70 is presented as extending from edge 705 and 706. In other embodiments not shown, the machined cavity can also extend from edge 705 or 706 towards the opposite edge, without extending through said opposite edge. In such embodiments, a fiber Bragg grating sensor 8 may be placed inside the machined cavity 70 only from the edge of the heat sink tile 7 from which said machined cavity 70 extends.

The fiber optic sensor comprises sections, herein referred to as sensing elements, that comprise a fiber Bragg grating. The sensing element may have a length of between 1 and 25 mm, more preferably between 1 and 10 mm, even more preferably between 1 and 5 mm. As is known in the art, an optical interrogator can be used to send a broad spectrum of light through a fiber optic sensor with fiber Bragg grating and measure the reflected Bragg wavelength. When a fiber optic sensor is heated up, the fiber and the fiber Bragg grating comprised in the fiber will expand and the refractive index of the optical fiber core may change. This combined expansion and change in refractive index of the fiber causes a shift in the reflected Bragg wavelength which can be measured with an optical interrogator. In embodiments of the present invention, fiber optic sensors were used wherein each sensing element comprises a fiber Bragg grating that reflects light with a different Bragg wavelength. This enables the measurement of the shift in Bragg wavelength due to a change in temperature at each individual sensing element.

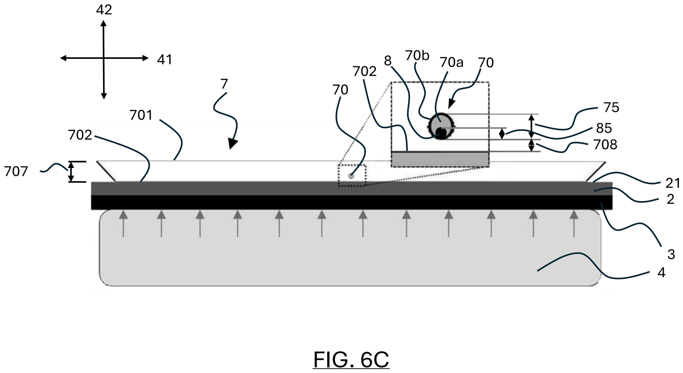

In figure 6C, a cross-sectional view of a step of the welding method in accordance with another embodiment of the invention is shown. The instrumented heat sink tile 7 has a thickness 707. The smallest distance 708 between the machined cavity 70 and the surface 702 that is to be in contact with surface 21 of molded part 2 is at most half the thickness 707 of heat sink tile 7. The machined cavities 70 has a transverse dimension 75 and can accommodate a fiber Bragg grating sensor 8. The ratio between a transverse dimension 85 of the fiber Bragg grating sensor 8 and a transverse dimension 75 of the machined cavity 70 is between 1 : 2 and 1 : 50, more preferably between 1 : 4 and 1 : 20, even more preferably between 1 : 5 and 1 : 10. Fiber optic sensor 8 is provided inside machined cavity 70 such that a dimensional gap 70a exists between the thermocouple 8 and the wall 70b of the cavity 70. The dimensional gap 70a may be an air gap, i.e. may be filled with (ambient) air. The fiber optic cable 8 may be locally in contact with the wall 70b of the machined cavity 70. The air gap 70a and the smoothness of wall 70b enable the fiber optic sensor to freely expand and contract substantially without friction. Each fiber optic sensor 8 is connected to an interrogator (not shown), as is known in the art.

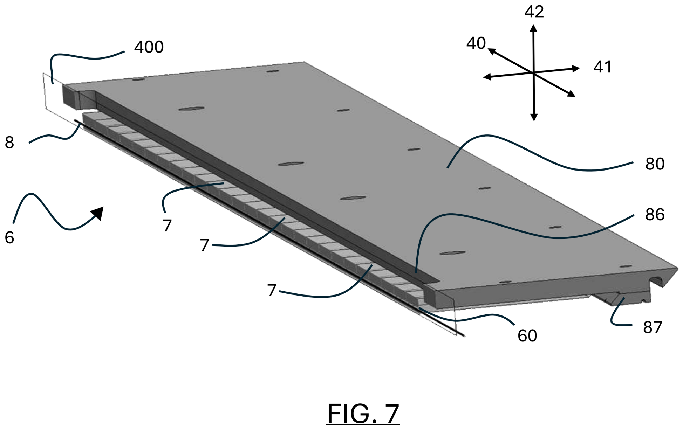

Figure 7 is a cross-sectional view of an instrumented heat sink 6 comprising twenty-seven instrumented heat sink tiles 7 adjacently arranged side by side against each other in a holder plate 80 in accordance with an embodiment of the invention. The heat sink tiles are held in place in holder plate 80 by the holder plate end brackets (not shown) and the slanted edges 87 which cooperates with the slanted edges 703 and 704 of each heat sink tile 7. Each instrumented heat sink tile 7 has a layout comparable to heat sink tile 7 in figure 6A, wherein each heat sink tile has a machined tile cavity 70 that extends from edge 705 to edge 706. The instrumented heat sink tiles are arranged such that edge 705 of one tile is in contact with edge 706 of an adjacent tile and such that the machined tile cavities 70 of the adjacently arranged heat sink tiles align to form the heat sink cavity 60, preferably extending from one end of the heat sink to another end of the heat sink. The heat sink cavity 60 can accommodate a fiber optic sensor 8 for measuring the temperature at a location within the cavities as shown in figure 7. The holder plate 80 comprises a groove 86 along its centerline in which device 1 is positioned during electromagnetic welding, such that the pressurizing surface 100 of device 1 is in direct contact with surface 701 of each heat sink tile 7 in heat sink 6.

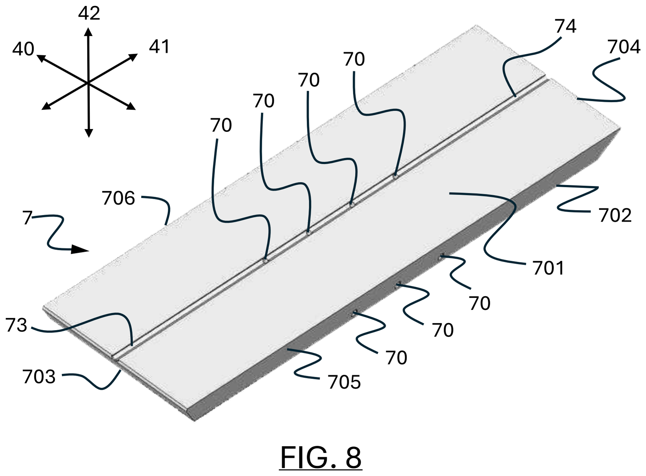

Figure 8 shows an instrumented heat sink tile 7 in accordance with yet another embodiment of the invention. Each instrumented heat sink tile 7 is bounded by a surface 701 that is intended to be in contact with the pressurizing body 10 (see figure 2) and a surface 702 opposite of surface 701 that is to be in contact with the upper surface 21 of molded part 2. The instrumented heat sink tile 7 furthermore has two side edges (703, 704) extending about parallel to a weld direction 40, and two edges (705, 706) extending about parallel to weld width direction 41 that is perpendicular to the weld direction 40. The instrumented heat sink 7 in figure 8 comprises four machined cavities 70 extending from the surface 701 and about perpendicular to said surface 701. The machined cavities 70 are provided to accommodate sensing devices for measuring the temperature at a location within the cavities 70, typically thermocouples. The instrumented heat sink 7 furthermore comprises three machined cavities 70 that extends from edge 705 of heat sink tile 7 substantially parallel to surface 702 and to opposite edge 706 of the heat sink tile 7. To form an instrumented heat sink 6, several instrumented heat sink tiles 7 are provided against each other along the edges (705, 706). In this way, an elongated instrumented heat sink 6 is formed that extends along a welding path in the welding direction 40. The instrumented heat sink tiles are arranged such that the machined tile cavity 70 extending from edge 705 in one heat sink aligns with machined tile cavity 70 extending from edge 706 in an adjected heat sink, thereby forming a continuous heat sink cavity. The continuous heat sink cavity can accommodate a fiber optic sensor for measuring the temperature at a location within the cavity. The combination of machined cavities extending from surface 702 and machined cavities extending from edges 705 and 706 enables the measurement of the temperature with different types of sensing devices to enable more precise temperature control of the temperature at the weld interface during electromagnetic welding. Other embodiments not shown may include combinations of machined cavities in other configurations, as long as the cavities do not cross each other.

Figure 9 shows a device 120 for holding a heat sink during machining. The device 120 comprises a machined slot on edge 121, wherein the shape of the machined slot can be any path that is closed, preferably the circumference of a rectangle. A rubber seal 123 is embedded inside the slot along its entire perimeter, wherein the seal extends from edge 121 such that it forms a raised perimeter along a plane parallel to the plane of edge 121. The slot has a dimension such that when a heat sink is placed on top of rubber seal 123, the heat sink substantially completely covers the rubber seal 123. The device 120 furthermore comprises at least one, preferably two machined cavities 124 that extend from edge 121 to edge 122 opposite edge 121. Each cavity 124 extends from a position on edge 121 that is within the perimeter of the machined slot comprising the rubber seal 123.

Device 120 is used to hold a heat sink tile in place during the process of machining one or more cavities 70 and/or one or more wiring slots (73, 74) into the material of a heat sink tile. The process for machining cavities and/or slots into a heat sink tile may comprise the steps of providing device 120, a heat sink tile to be machined, and a tool for machining cavities and or wiring slots into the heat sink tile to be machined; fixing device 120 in place relative to the machining tool; placing the heat sink tile on the rubber seal 123 of device 120 such that the heat sink tile substantially covers the entire perimeter of the rubber seal 123; creating a partial vacuum between the heat sink tile and device 120 by connecting a vacuum pump to cavities 124 on edge 122; machining the cavities and/or slots into the heat sink tile using the machining tool; removing the partial vacuum between the heat sink tile and device 120 by disconnecting the vacuum pump from cavities 124; and removing the machined heat sink tile from device 120.

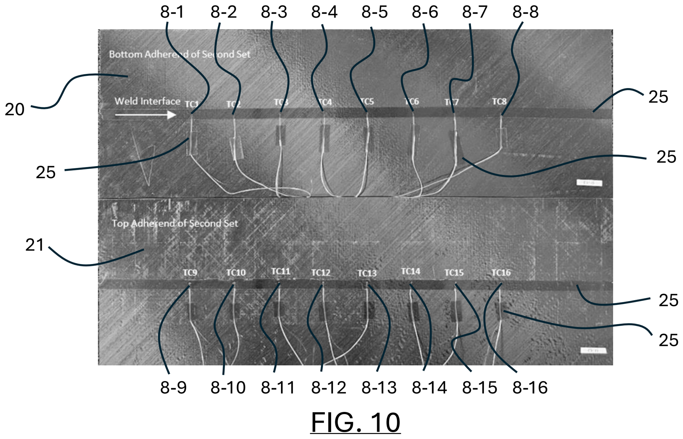

Figure 10 shows the two opposite surfaces of a molded part 2 to which thermocouples (8-1 to 8-16) are attached. The top half of figure 10 shows a surface 20 of molded part 2 that is to be contacted with a surface 30 of a molded part 3. The bottom half of figure 10 shows a surface 21 of molded part 2 that is to be contacted with a heat sink 6. The thermocouples (8-1 to 8-16) are attached to molded part 2 using a heat-resistant tape, for example a polyimide. Thermocouple 8-1 is positioned substantially directly opposite of 8-9 on molded part 2, thermocouple 8-2 is positioned substantially directly opposite of 8-10, and so on.

The molded part with attached thermocouples and instrumented heat sink 6 from figure 7 were used in an electromagnetic welding experiment. A fiber optic sensor 8 comprising four sensing elements with a length of 1 cm is placed inside the heat sink cavity 60 of instrumented heat sink 6 such that the first sensing element is aligned with thermocouples 8-2 and 8-10, the second sensing element is aligned with thermocouples 8-4 and 8-12, the third sensing element is aligned with thermocouples 8-6 and 8-14, and the fourth sensing element is aligned with thermocouples 8-8 and 8-16.

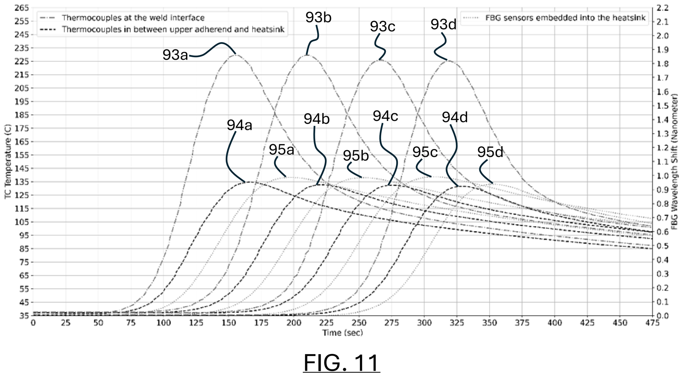

Figure 11 is a chart illustrating the temperature measured with the thermocouples and wavelength shift measures with the fiber optic sensor during the electromagnetic welding experiment. The x-axis represents the duration of the experiment in seconds. The left y-axis represents the temperature in °C as measured with the thermocouples (8-2, 8-4, 8-6, 8-8, 8-10, 8-12, 8-14, and 8-16). The temperature can be measured with any type-E thermocouple, as long as the wires fit inside the machined cavities and wiring slots. For the experiment in this embodiment, Omega TT-E-40 thermocouple wires were used, which were spot welded for this experiment.

The right y-axis represents the wavelength shift in nm as measured with the fiber optic sensor. The wavelength shifts can be measured with any type of single mode optic fiber with fiber Bragg grating, as long as the ratio between a transverse dimension of the optic fiber 8 and a transverse dimension of the machined cavity 70 is between 1 : 2 and 1 : 50, more preferably between 1 : 4 and 1 : 20, even more preferably between 1 : 5 and 1 : 10. For the experiment in this embodiment, a polyimide coated SMF optical fiber was used, having a transverse dimension of 150 nm and comprising four 10 mm long fiber Bragg grating sensing elements. The heat sink cavity 60 in heat sink 6 has a transverse dimension of 1 mm, resulting in a ratio of transverse dimensions of 1 : 6.7. The sensing elements in the fiber Bragg grating sensor 8 each reflect light at a specific Bragg wavelength. Before the electromagnetic welding experiment, these specific Bragg wavelengths were measured to be 1559 nm for the first sensing element, 1551nm for the second sensing element, 1543 nm for the third sensing element, and 1535 nm for fourth sensing element. The wavelengths were measured with a Luna/Micronoptics Hyperion si225 interrogator.

The dotted lines represent wavelength shift profiles measured with fiber optic sensor 8 positioned inside the heat sink cavity 60 in instrumented heat sink 6. From left to right, the first dotted line corresponds with wavelength shifts measured by the first sensing element, the second dotted line corresponds with wavelength shifts measured by the second sensing element, and so forth.

The dashed lines represent temperature profiles measured with thermocouples positioned between the contact surface 21 of molded part 2 and instrumented heat sink 6g. From left to right, the first dashed line corresponds with temperatures measured by the thermocouple 8-10, the second dashed line corresponds with temperatures measured by the thermocouple 8-12, and so forth.

The dots-and-dashes lines represent temperature profiles measured with thermocouples positioned between the contact surfaces (20, 30) of the molded parts (2, 3). From left to right, the first dots-and-dashes line corresponds with temperatures measured by the thermocouple 8-2, the second dots-and-dashes line corresponds with temperatures measured by the thermocouple 8-4, and so forth.

During the experiment, device 1 is moved from left to right in reference to figure 10. As the inductor approaches the position of a thermocouple, an increase in temperature is measured by the thermocouples as a result of the induction-sensitive components heating up in the vicinity of the thermocouple. This increase in temperature is first registered by the set of thermocouples 8-2 and 8-10, then by the set 8-4 and 8-12, and so on. A slight time shift is observed between peaks 93a to 93d and peaks 94a to 94d due to the time it takes for heat to dissipate from the weld interface to the location of each respective sensing device. Once the inductor has passed the position of a thermocouple and continues its path along the weld line, the thermocouple will measure a decrease in temperature as the magnetic field strength subsides and the heat in the induction-sensitive components slowly dissipates until it reaches equilibrium with the surrounding temperature.

Simultaneously, as the induction-sensitive components in the molded parts heat up, heat dissipates to instrumented heat sink 6 and to the fiber optic sensor 8 inside the heat sink cavity 60 of instrumented heat sink 6. The heating up of the optical fiber causes it to expand and may also cause the refractive index of the optical fiber core to change, resulting in a shift of the Bragg wavelengths. The higher the temperature, the more the wavelength shifts. This increase in wavelength shift is first registered by the first sensing element, then by the second sensing element, and so on. A slight time shift is observed between peaks 93a to 93d, peaks 94a to 94d, and peaks 95a to 95d due to the time it takes for heat to dissipate from the weld interface to the location of each respective sensing device. The broader peaks of the fiber optical sensor (95a-d) may be shortened by selecting a shorter sensor length. Once the inductor has passed the position of a sensing element in the fiber optic sensor 8 and continues its path along the weld line, the magnetic field strength subsides, the heat in the induction-sensitive components slowly dissipates until it reaches equilibrium with the surrounding temperature, the sensing elements in the fiber Bragg grating sensor contract to the length they possessed prior to welding and the refractive indices restore to what they were prior to welding. As a result, the wavelength shifts decrease as the specific Bragg wavelengths return to the specific Bragg wavelengths measured before the electromagnetic welding experiment.

A first correlation exists between the wavelength shifts measured in a fiber optic sensor with fiber Bragg grating 8 positioned inside a heat sink cavity 60 in the instrumented heat sink 6 and the temperature measured at the weld interface between the molded parts (2,3). Furthermore, a second correlation exists between the electromagnetic field strength of the inductor 11 and the temperature at the weld interface. The correlations may be obtained in the same manner as disclosed hereinabove for the TC's. During electromagnetic welding, the wavelength shifts are measured with a fiber optic sensor positioned inside a machined cavity in the heat sink and the first correlation is used to calculate the temperature at the weld interface. Said calculated temperature at the weld interface is controlled by adjusting the electromagnetic field strength of the inductor 11 using the second correlation.

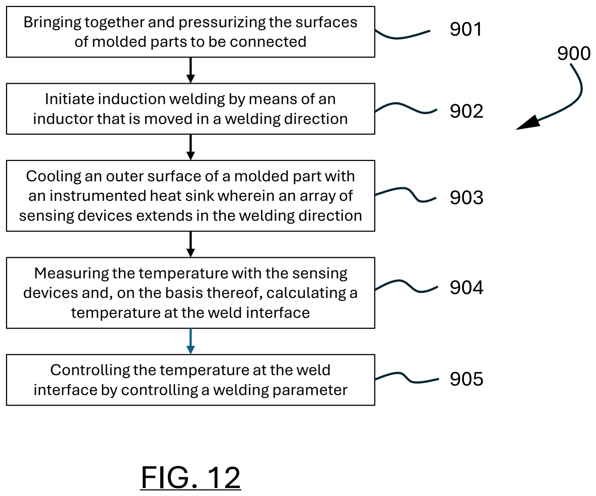

Figure 12 is a flow chart illustrating a method 900 for temperature-controlled electromagnetic welding of a first molded part and a second molded part according to one embodiment. In step 901, the first and the second molded part to comprise a heat meltable coupling material and an induction-sensitive component are provided. The surfaces to be connected are brought together and pressurized by providing a pressurizing surface of a pressurizing body against the molded parts. In step 902, an electromagnetic field is generated in at least the surfaces to be connected of the molded parts by means of an inductor that is moved in a welding direction, thereby heat melting the coupling material in a weld interface by heating the induction-sensitive component. In step 903, an outer surface of the first molded part is cooled by providing an instrumented heat sink in direct contact with an outer surface of the first molded part. The instrumented heat sink comprises an array of sensing devices (thermocouples and/or fiber optic sensors with fiber Bragg grating) that extends about parallel to the welding direction. In step 904, the temperature is measured with the sensing device and, on the basis thereof, a temperature at the weld interface is calculated. In step 905, the temperature at the weld interface is controlled by a controller that is adapted for measuring the temperature of the sensing device, and, on the basis thereof, calculating a temperature at the weld interface and controlling the welding parameter. Examples of welding parameters to control the temperature at the weld interface may include but are not limited to the electromagnetic field strength generated by inductor 11, the distance between the inductor and the weld interface, the speed at which the inductor traverses along a weld direction, and/or the amount of coolant flowing through the heat sink comprising active cooling.

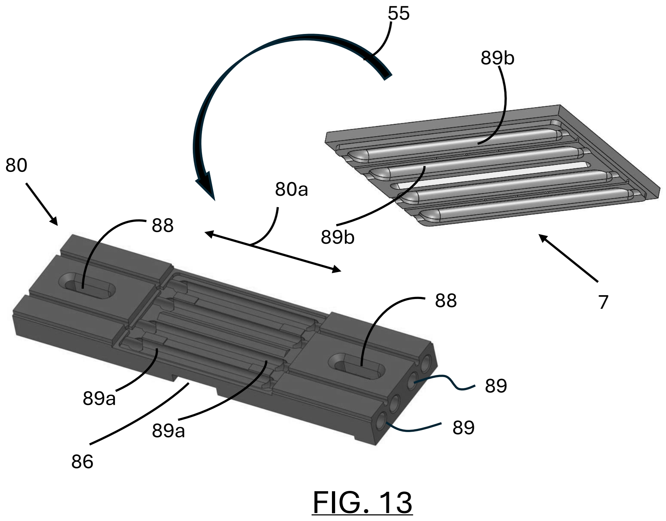

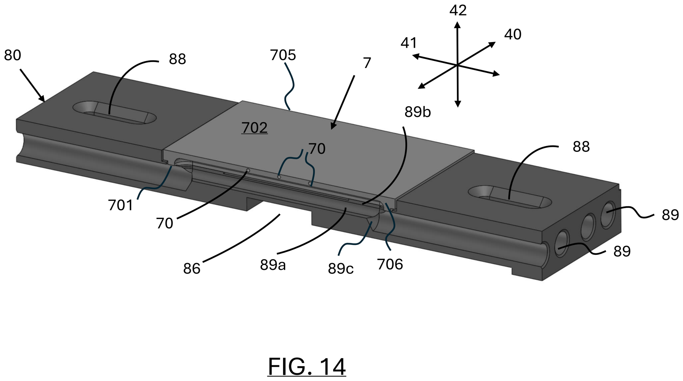

Figure 13 shows yet another embodiment of an instrumented heat sink tile 7 and a portion of a holder plate into which the heat sink tile may be fixed. Thereto, the holder plate 80 is provided with a centrally disposed depressed receiving area 80a into which a heat sink tile 6 may be received and fixed, for instance by adhesive bonding or any other suitable means. This process is schematically shown by the arrow 55 and involves turning the heat sink tile 7 (which is shown upside down) over onto the holder plate 80. Please note that the holder plate 80 typically extends along a length such that a plurality of heat sink tiles 7 may be accommodated into it, such as shown in figure 7. The holder plate 80 portion shown has oval holes 88 that are provided for mounting. The holder plate 80 portion further has a number of cooling channels 89, for instance 4 for a single heatsink tile 7, as shown. The ends of the cooling channels 89 are configured for connecting to, for instance, hoses that carry a liquid coolant, such as water. In the embodiment shown, each cooling channel 89 in the holder plate 80 portion deviates from its linear path when entering the receiving area 80a, to move closer to the attached heatsink tile 7. This is more easily seen in figure 14 which shows a cooling channel 89 in a cut open state. The deviation or jump occurs at wall part 89c. The jump in the cooling channel 89 avoids interfering with the groove 86 for the induction coil, which groove 86 aims at minimizing the coupling distance between the induction coil and the molded parts (2, 3) to be welded. The cooling channels 89a in the heatsink receiving area 80a of the holder plate 80 portion are 'exposed' when the heat sink 7 is not received in said area 80a. These channels 89a however cooperate with open cooling channels 89b, provided in the heat sink tile 7 in that they form closed cooling channels 89 when the heat sink tile 7 is attached to the plate holder 80. It is also possible that the heat sink tile 7 may have part of the channels 89b machined in, to allow coolant to flow even closer to the surface 702 that is intended to contact the molded parts (2, 3).

The holder plate 80 may be conveniently manufactured from a glass fiber-epoxy composite material for instance, but may also be made from other rigid solids that are transparent to magnetic fields, are machinable and impermeable for liquid coolant, such as water. In an embodiment wherein the heat sink tile 7 material is a ceramic such as boron nitride and the coolant is aqueous or water, the colling channels are then preferably coated and/or sealed from direct contact with the coolant to inhibit or even prevent oxidation.

With reference to figure 14, a heat sink tile 7 fixed to a holder plate 80 portion is shown in a perspective view. As already mentioned above, the holder plate 80 portion is shown in a cut-open view in which one of the coolant channels 89 is exposed. The heat sink tile 7 has FBG cavities 70 integrated therein by machining, and extending parallel to the weld direction 40.

In figure 15, an instrumented heat sink tile 7 having integrated TC cavities and wiring slots is shown in a cut-open view. In this embodiment, integration with TCs has caused a redesign of the TC wiring slot routing, because of a potential space conflict with the cooling channels 89. The heat sink tile 7 has 3 TCs provided along the weld width direction 41, though less or more TCs are possible. The TC wiring slots (73, 74) can accommodate multiple TC wires, such as 2 for wiring slots 73 and one for wiring slot 74 provided on the other side from of the heat sink tile 7. Other configurations are not excluded, however.

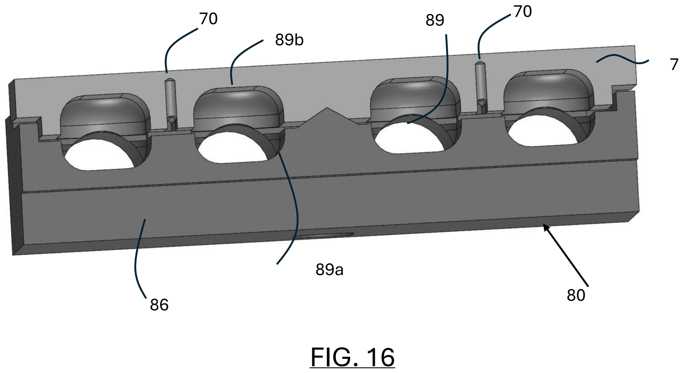

With reference to figure 16 a cross-sectional view is shown of a cross-section through the groove 86 of an assembly of a heat sink tile 7 and a holder plate 80 portion provided with cooling channels 89 and cavities 70 for TC. Preferably, design aspects such as depth of the FBG/TC measurement points, size/location of the cooling channels 89, or thickness of the heatsink at the cooling channels 89 may all be selected dependent on the particular requirements. For instance, the TC measurement points should not be too close to the cooling channels 89 to focus the temperature measurement on the heatsink surface rather than on the coolant in the cooling channels 89. The closer the coolant is to the surface 702 intended to contact the heated molded parts (2, 3), the more effective the cooling may be. However, the small distance remaining between a cooling channel 89 and a heat sink tile surface may make the heat sink tile 7 too fragile to be put under the required pressure.

The embodiments shown in figures 13-16 comprise a liquid-cooling integrating into an instrumented heatsink 6. This allows reducing weld (production) cycle times, since the heat sink can cool faster in between welding operations. Controlling the cooling rate or cooling capacity of the heat sink 6 during the welding process may be tailored to the molded parts that are being welded, depending on their temperature requirements. Coolant temperature and coolant flow rate may become controllable parameters, dependent on what the sensing devices are measuring during the welding process. Incorporating such controllable parameters opens more opportunities for process control.

## Claims

1. An instrumented heat sink for use in electromagnetic welding of molded parts, the heat sink comprising a material having a thermal conductivity according to ASTM C1113 at a temperature of 25 °C of greater than 0.1 W/m-K, wherein the heat sink comprises a machined cavity and, accommodated therein, a sensing device for measuring the temperature at a location within the cavity, wherein further a dimensional gap exists between the sensing device and a wall of the cavity such that deformations of the sensing device and of the heat sink are substantially uncoupled.

2. An instrumented heat sink as claimed in claim 1, wherein the dimensional gap is unfilled and forms an air gap, or, wherein the dimensional gap is filled at least partly with a filling material that differs from the material of the heat sink.

3. An instrumented heat sink as claimed in claim 1 or 2, wherein the heat sink material has a thermal conductivity according to ASTM C1113 at a temperature of 25 °C from 0.1-250 W/m-K, more preferably from 25-250 W/m-K, even more preferably from 50-250 W/m-K, even more preferably still from 80-250 W/m-K.

4. An instrumented heat sink as claimed in any one of claims 1-3, wherein the heat sink material comprises a ceramic, substantially comprising a nitride, preferably substantially comprising a composite of nitrides, more preferably substantially comprising a composite of boron nitride and aluminum nitride.

5. An instrumented heat sink as claimed in claim 4, wherein the ceramic material has a hardness according to ISO 6508 from 15-75 HR[A], more preferably from 25-50 HR[A], even more preferably from 30-40 HR[A].

6. An instrumented heat sink as claimed in any one of claims 1-5, wherein the machined cavity is substantially cylindrical and has a diameter of between 0.5 and 2.5 mm, more preferably between 0.5 and 2.0 mm, even more preferably between 0.5 and 1.5 mm, and, optionally, wherein the diameter has a non-zero tolerance of at most 0.5 mm, more preferably at most 0.25 mm, even more preferably at most 0.2 mm.

7. An instrumented heat sink as claimed in any one of claims 1-6, wherein the sensing device comprises a thermocouple or a fiber optic sensor, preferably a fiber Bragg grating sensor, or a combination of both.

8. An instrumented heat sink as claimed in any one of claims 1-7, wherein the sensing device is a thermocouple, and wherein the machined cavity extends from an outer surface of the heat sink that is intended not to contact one of the molded parts and substantially perpendicular to said outer surface.

9. An instrumented heat sink as claimed in any one of claims 1-8, wherein the sensing device is a fiber optic sensor, and wherein the machined cavity extends from an edge of the heat sink substantially parallel to an outer surface of the heat sink that is intended to contact one of the molded parts towards an opposite edge of the heat sink.

10. An instrumented sink as claimed in claim 9, wherein the fiber optic sensor is a fiber Bragg grating sensor having a sensing element with a length of between 1 and 25 mm, more preferably between 1 and 15 mm, even more preferably between 1 and 5 mm.

11. An instrumented heat sink as claimed in any one of claims 1-10, wherein an outer surface of the heat sink that is intended to contact one of the molded parts is provided with a high temperature resistant polymer coating or film, preferably a polyimide film or a polysilazane coating.

12. An instrumented heat sink as claimed in any one of claims 1-11, comprising a number of heat sink tiles adjacently arranged side by side against each other, preferably provided in a holder plate.

13. An instrumented heat sink as claimed in claim 12, wherein each heat sink tile has a machined tile cavity, and the machined tile cavities of the adjacently arranged heat sink tiles align to form the heat sink cavity, preferably extending from one end of the heat sink to another end of the heat sink.

14. An instrumented heat sink as claimed in any one of claims 12 or 13, further comprising means for active cooling of the instrumented heat sink.

15. A method of connecting surfaces of a first molded part and a second molded part by temperature-controlled electromagnetic welding, comprising the steps of:
- providing the first and the second molded part to comprise a heat meltable coupling material and an induction-sensitive component;
- bringing together the surfaces to be connected and pressurizing the surfaces to be connected by providing a pressurizing surface of a pressurizing body against the molded parts;
- generating an electromagnetic field in at least the surfaces to be connected of the molded parts by means of an inductor that is moved in a welding direction, thereby heat melting the coupling material in a weld interface by heating the induction-sensitive component;
- cooling an outer surface of the first molded part by providing an instrumented heat sink as claimed in any one of claims 1-14 in direct contact with an outer surface of the first molded part and optionally such that an array of sensing devices (such as thermocouples and/or fiber Bragg grating sensors) extends about parallel to the welding direction;
- measuring the temperature with the sensing devices and, on the basis thereof, calculating a temperature at the weld interface;
- controlling the temperature at the weld interface by controlling a welding parameter; and
- coupling the molded parts under pressure by the molten heat meltable coupling material.

16. An apparatus for connecting surfaces of a first molded part and a second molded part along a welding direction by temperature-controlled electromagnetic welding, whereby the first and the second molded part comprise a heat meltable coupling material and an induction-sensitive component, the device comprising:
- an inductor provided for generating an electromagnetic field in at least the surfaces to be connected of the molded parts along the welding direction, thereby heat melting the coupling material in a weld interface by heating the induction-sensitive component;
- an instrumented heat sink as claimed in any one of claims 1-14 with the heat sink arranged along the weld direction with its outer surface provided against one of the molded parts and such that the heat sink is arranged between the inductor and the molded parts;
- a pressurizing body provided for pressurizing the surfaces to be connected; and
- a controller adapted for measuring the temperature of the heat sink by at least one sensing device, and, on the basis thereof, calculating a temperature at the weld interface and controlling a welding parameter.
